# EUROPÄISCHE PATENTSCHRIFT

(11) **EP 2 531 736 B1**
(45) Veröffentlichungstag und Bekanntmachung des Hinweises auf die Patenterteilung: **05.03.2014**
(21) Anmeldenummer: 11708213.1
(22) Anmeldetag: 02.02.2011
(51) Int. Cl.: F16B 5/12, B60N 3/04, A42B 3/04

(54) **BEFESTIGUNGSANORDNUNG**
FASTENING ARRANGEMENT
SYSTÈME DE FIXATION

(30) Priorität: 03.02.2010 DE 102010006827
(43) Veröffentlichungstag der Anmeldung: 12.12.2012
(73) Patentinhaber: Fidlock GmbH, 30163 Hannover (DE)
(72) Erfinder: FIEDLER, Joachim, 30175 Hannover (DE)
(74) Vertreter: Schröder, Christoph
(86) Internationale Anmeldenummer: PCT/EP2011/051475
(87) Internationale Veröffentlichungsnummer: WO 2011/095515

(56) Entgegenhaltungen:
- EP-A2- 2 062 489
- WO-A2-2009/092368
- DE-A1- 19 954 857

## Beschreibung

Die Erfindung betrifft eine Befestigungsanordnung zur Befestigung eines biegsamen Elements an einem starren Element nach dem Oberbegriff des Anspruchs 1.

Eine derartige Befestigungsanordnung weist ein erstes Verschlusselement und ein zweites Verschlusselement auf, die jeweils aus einem Steckerteil, einem Gehäuseteil und einer Rastung bestehen. Jedes Verschlusselement wird verschlossen, indem das Steckerteil und das Gehäuseteil in eine Schließrichtung bis zum Einrasten in einer Schließstellung zusammengesteckt werden und durch die Rastung dann in der Schließstellung entgegen der Schließrichtung aneinander gehalten sind. Jedes Gehäuseteil ist hierbei so ausgebildet, dass durch eine Relativbewegung des Gehäuseteils relativ zu dem Steckerteil in eine Öffnungsrichtung, die sich von der Schließrichtung unterscheidet, das Steckerteil aus der Rastung geschoben und das Verschlusselement damit geöffnet werden kann. Das Steckerteil des ersten Verschlusselements und das Steckerteil des zweiten Verschlusselements sind fest an dem einen von starrem Element und biegsamem Element und das Gehäuseteil des ersten Verschlusselements und das Gehäuseteil des zweiten Verschlusselements fest an dem anderen von starrem Element und biegsamem Element angeordnet.

Das mittels der Befestigungsanordnung zu befestigende biegsame Element kann beispielsweise durch eine Fußmatte ausgebildet sein, die an einem ein starres Element verwirklichenden Fahrzeugboden anzuordnen und zu befestigen ist.

Eine Fußmatte wird herkömmlicherweise durch zwei druckknopfartige Befestigungsmittel an einem Fahrzeugboden befestigt, damit die Fußmatte gegen ein Verrutschen gesichert ist. Die druckknopfartigen Befestigungsmittel werden durch Druck geschlossen und durch Zug wieder geöffnet. Bei einer solchen Befestigung kann es jedoch vorkommen, dass der Benutzer die Fußmatte unachtsam einlegt und die Befestigungsmittel nicht oder zumindest nicht vollständig in Eingriff gelangen. Zudem kann es vorkommen, dass z.B. in einem Crash-Fall oder bei einer heftigen Fußbewegung die Matte aus den Befestigungsmitteln gerissen wird. Beides kann im schlimmsten Fall dazu führen, dass eine Fußmatte bei einem Fahrersitz unter das Gas- oder Bremspedal des Fahrzeugs rutscht und das Gas- oder Bremspedal blockiert, so dass das Fahrzeug nicht mehr kontrollierbar ist.

Bei einer aus der WO 2009/092368 A2 bekannten Befestigungsanordnung sind zwei Verschlussmodule vorgesehen, die in einem Schließzustand über eine mechanische Rastvorrichtung aneinander gehalten werden und zum Öffnen entlang einer von einer Schließrichtung unterschiedlichen Öffnungsrichtung gegeneinander bewegt werden können.

Der vorliegenden Erfindung liegt die Aufgabe zugrunde, eine Befestigungsanordnung zu schaffen, die eine möglichst sichere Befestigung eines biegsamen Elementes an einem starren Element mittels mehrerer Verschlusselemente und ein einfaches Lösen des biegsamen Elementes von dem starren Element ermöglicht.

Diese Aufgabe wird durch einen Gegenstand mit den Merkmalen des Anspruchs 1 gelöst.

Jedes Verschlusselement besteht aus einem Steckerteil und einem Gehäuseteil und einer Rastung zwischen Stecker und Gehäuse. Jedes Verschlusselement wird verschlossen, indem der Stecker in eine Schließrichtung mit dem Gehäuseteil bis zum Einrasten in einer Schließstellung zusammengesteckt wird. Dann sind Stecker und Gehäuse entgegengesetzt zur Schließrichtung unlösbar (die Verrastung ist also nur unter Zerstörung der Verrastung durch eine Bewegung entgegengesetzt zur Schließrichtung lösbar; ggf. kann die Verrastung alternativ auch so ausgestaltet sein, dass ein Lösen entgegengesetzt zur Schließrichtung unter Aufwendung einer (Missbrauchs-)Kraft ohne Zerstörung möglich ist). Das Gehäuseteil ist so ausgebildet, dass durch eine Relativbewegung des Gehäuseteils relativ zu dem Steckerteil in eine Öffnungsrichtung, die sich von der Schließrichtung unterscheidet, das Steckerteil seitlich aus der Rastung geschoben und damit geöffnet werden kann.

Weiterhin sind die mindestens zwei Steckerteile mindestens zweier Verschlusselemente fest an dem einen von starrem Element und biegsamem Element und die Gehäuseteile fest an dem anderen von starrem Element und biegsamem Element angeordnet.

Die Gehäuse sind so angeordnet, dass die Öffnungsrichtungen der beiden Verschlusselemente mit mindestens einer Richtungskomponente gegeneinander gerichtet sind. Außerdem sind die Öffnungsrichtungen so angeordnet, dass beim Öffnen das biegsame Element zwischen den beiden Gehäuseteilen gebogen wird. Im nicht gebogenen Zustand des biegsamen Elementes sind die Gehäuseteile so beabstandet, dass sie gegenüber den am starren Element angeordneten Steckerteilen liegen und durch Bewegung in die Schließrichtung mit diesen verrasten. In dem gebogenen Zustand sind die Steckerteile seitlich aus der Rastung verschoben.

Darunter, dass sich die Schließrichtung von der Öffnungsrichtung unterscheidet, kann vorliegend insbesondere zu verstehen sein, dass die Schließrichtung und die Öffnungsrichtung nicht parallel und auch nicht antiparallel (also nicht entgegen gesetzt zueinander) gerichtet sind. Die Öffnungsrichtung kann beispielsweise senkrecht oder unter einem schrägen Winkel zu der Schließrichtung gerichtet sein.

Unter einer Richtungskomponente ist vorliegend eine Vektorkomponente der Öffnungsrichtung bei einer Vektorzerlegung des Vektors der Öffnungsrichtung zu verstehen. Darunter, dass die Öffnungsrichtungen der beiden Verschlusselemente mit mindestens einer Richtungskomponente gegeneinander gerichtet sind, ist dann zu verstehen, dass die Öffnungsrichtung des ersten Verschlusselements eine Richtungs-(vektor-)komponente aufweist, die antiparallel zu einer Richtungs-(vektor-)komponente der Öffnungsrichtung des zweiten Verschlusselements gerichtet ist.

Unter dem nicht gebogenen Zustand des biegsamen Elements wird ein Zustand verstanden, in dem das biegsame Element sich in einer bestimmungsgemäßen Normalgebrauchsstellung befindet. Dies schließt mit ein, dass das biegsame Element in seiner Normalgebrauchsstellung gekrümmt ausgestaltet ist. Der gebogene Zustand entspricht dann einem Zustand, in dem das biegsame Element aus seiner gekrümmten Normalgebrauchsstellung heraus gebogen ist. Ist das biegsame Element elastisch ausgestaltet, so ist das biegsame Element in dem nicht gebogenen Zustand entspannt, also elastisch nicht verspannt.

Erfindungsgemäß kann zum Lösen des biegsamen Elements vom starren Element die Befestigungsanordnung gelöst werden, indem die Gehäuseteile der Verschlusselemente der Befestigungsanordnung jeweils in die einem jeweiligen Verschlusselement zugeordnete Öffnungsrichtung gegenüber den Steckerteilen der Verschlusselemente bewegt werden. Dadurch, dass die dem ersten Verschlusselement zugeordnete Öffnungsrichtung dabei anders gerichtet ist als die dem zweiten Verschlusselement zugeordnete Öffnungsrichtung, ist ein Öffnen der Befestigungsanordnung (durch Verschieben der Gehäuseteile der Verschlusselemente relativ zu den zugeordneten Steckerteilen) nur durch ein Verformen des biegsamen Elements möglich und kann somit nur in einer bewussten Weise durchgeführt werden, so dass ein unbeabsichtigtes Öffnen nicht oder zumindest nur schwer möglich ist.

Die beiden Öffnungsrichtungen der Verschlusselemente können beispielsweise mit einer Richtungskomponente aufeinander zu gerichtet sein. Durch Verformen des biegsamen Elements werden dann die Gehäuseteile relativ zu den Steckerteilen bewegt, so dass die Gehäuseteile außer Eingriff mit den Steckerteilen gebracht werden und die Befestigungsanordnung geöffnet wird.

Ist das biegsame Element beispielsweise durch eine Fußmatte eines Fahrzeugs ausgestaltet, so können die Gehäuseteile an der ein biegsames Element verwirklichenden Fußmatte und die Steckerteile an einem ein starres Element verwirklichenden Fahrzeugboden angeordnet sein. Durch Anheben der Fußmatte und einem damit einhergehenden Aufeinanderzubewegen der Gehäuseteile derart, dass die Steckerteile aus der Rastung am Gehäuseteil gleiten, kann dann die Befestigung der Fußmatte an dem Fahrzeugboden gelöst und die Fußmatte entnommen werden.

Das Lösen des biegsamen Elements kann damit auf einfache Weise erfolgen, wobei gleichzeitig eine sichere Befestigung in der Schließstellung der Verschlusselemente gewährleistet und das Risiko für ein unbeabsichtigtes Lösen des biegsamen Elements von dem starren Element reduziert ist.

Gleichzeitig kann die Befestigungsanordnung auch auf einfache Weise in ihre Schließstellung überführt werden, indem die Verschlusselemente dadurch geschlossen werden, dass das Gehäuseteil und das Steckerteil in die Schließrichtung aneinander angesetzt werden und dadurch das Steckerteil mit der Rastung verrastet wird.

Die Befestigungsanordnung mit ihren Verschlusselementen kann rein mechanisch ausgebildet sein, indem die Gehäuseteile und die Steckerteile zum Schließen manuell aneinander angesetzt und zusammen gedrückt werden müssen. Das Überführen der Verschlusselemente in ihre jeweilige Schließstellung kann alternativ aber auch dadurch unterstützt werden, dass magnetische Mittel vorgesehen sind, die das Schließen der Verschlusselemente unterstützen, indem sie eine magnetische Anziehungskraft zwischen dem Gehäuseteil und dem Steckerteil eines jeden Verschlusselementes bewirken.

Hierzu können an dem Steckerteil und an dem Gehäuseteil eines jeden Verschlusselements jeweils ein Magnet oder einerseits ein Magnet und andererseits ein magnetischer Anker in Form eines aus einem ferromagnetischen Material hergestellten Bauteils angeordnet sein. Die so verwirklichten magnetischen Mittel bewirken zum Unterstützen des Schließens eines jeden Verschlusselements eine magnetische Anziehungskraft in die Schließrichtung zwischen dem Steckerteil und dem Gehäuseteil und stehen sich in der Schließstellung des jeweiligen Verschlusselementes anziehend gegenüber.

Vorteilhafterweise können die Rastung und die magnetischen Mittel so aufeinander abgestimmt sein, dass die magnetische Anziehungskraft mindestens so groß ist, dass das Steckerteil zum Schließen selbsttätig mit der Rastung in Eingriff gelangt. Bei Ansetzen des Gehäuseteils an das Steckerteil in die Schließrichtung gleitet das Steckerteil damit in magnetisch unterstützter Weise selbsttätig oder nahezu selbsttätig in die zugeordnete Rastung, so dass jedes Verschlusselement auf einfache und haptisch angenehme Weise schließt und keine besondere Sorgfalt beim Ansetzen der Gehäuseteile an die Steckerteile aufgewandt werden muss.

In einer weiteren vorteilhaften Ausgestaltung können die magnetischen Mittel des ersten Verschlusselements und des zweiten Verschlusselements derart polarisiert sein, dass zwischen dem Steckerteil des ersten Verschlusselements und dem Gehäuseteil des zweiten Verschlusselements, wenn dieser (fälschlicherweise) einander angenähert werden, eine magnetische Abstoßungskraft wirkt. Die magnetischen Mittel des ersten Verschlusselements und die magnetischen Mittel des zweiten Verschlusselements sind somit umgekehrt zueinander gepolt. Auf diese Weise kann das Gehäuseteil des ersten Verschlusselement nicht oder zumindest nicht ohne Weiteres an das Steckerteil des zweiten Verschlusselements und umgekehrt das Gehäuseteil des zweiten Verschlusselements auch nicht oder zumindest nur erschwert an das Steckerteil des zweiten Verschlusselements angesetzt werden. Ein Nutzer wird, wenn er die Befestigungsanordnung in falscher Weise schließen will, diese magnetische Abstoßungskraft bemerken und damit die Ausrichtung des starren Elements zum biegsamen Element zum richtigen Ansetzen und Befestigen korrigieren. Z.B. können durch geeignete Polarisierung der magnetischen Mittel auch die Fußmatte von Fahrer und Beifahrer unverwechselbar ausgeführt sein.

Die Öffnungsrichtung des ersten Verschlusselements und die Öffnungsrichtung des zweiten Verschlusselements sind in einer vorteilhaften Ausgestaltung anti-parallel zueinander gerichtet, weisen also in genau entgegengesetzte Richtungen. Denkbar und möglich ist aber auch, dass die Öffnungsrichtungen schräg zueinander gerichtet sind, wobei in jedem Fall aber eine Richtungskomponente der Öffnungsrichtung des ersten Verschlusselements entgegengesetzt zu einer Richtungskomponente des zweiten Verschlusselements gerichtet ist.

Die Befestigungsanordnung weist ein erstes Verschlusselement und ein zweites Verschlusselement auf. Zusätzlich können aber auch noch ein oder mehrere weitere Verschlusselemente vorgesehen sein, die nach der gleichen Art wir das erste Verschlusselement und das zweite Verschlusselement ausgebildet sein können. Vorteilhafterweise weisen in diesem Fall die Öffnungsrichtungen aller Verschlusselemente auf einen gemeinsamen Mittelpunkt hin, so dass durch eine an diesem Mittelpunkt angreifende oder zumindest durch den Mittelpunkt weisende Öffnungskraft die Verschlusselemente gemeinsam geöffnet und damit das biegsame Element von dem starren Element gelöst werden kann.

Die Schließrichtung des ersten Verschlusselements und die Schließrichtung des zweiten Verschlusselements sind vorteilhafterweise parallel zueinander und senkrecht zu einer Ebene, in der sich die Öffnungsrichtungen der Verschlusselemente erstrecken, gerichtet. Durch Ansetzen der Gehäuseteile und der Steckerteile aneinander entlang der parallel zueinander gerichteten Schließrichtungen des ersten Verschlusselements und des zweiten Verschlusselements kann die Befestigungsanordnung dann auf leichte Weise geschlossen und die Befestigung hergestellt werden, ohne dass hierzu das biegsame Element aus seinem entspannten, nicht gebogenen Zustand verformt werden müsste.

Die Steckerteile des ersten Verschlusselements und des zweiten Verschlusselements können in einer konkreten Ausgestaltung fest an dem starren Element und die Gehäuseteile des ersten Verschlusselements und des zweiten Verschlusselements fest an dem biegsamen Element angeordnet sein. Denkbar und möglich ist aber auch, die kinematisch umgekehrte Anordnung, bei der die Steckerteile an dem biegsamen Element und die Gehäuseteile an dem starren Element angeordnet sind. Zudem ist eine Anordnung denkbar, bei der die Steckerteile und die Gehäuseteile teilweise an dem biegsamen Element und teilweise an dem starren Element angeordnet sind.

Die Rastung eines jeden Verschlusselements kann vorteilhafterweise durch eine an dem Gehäuseteil angeordnete Rastfeder ausgebildet sein, mit der das zugeordnete Steckerteil durch Ansetzen entlang der Schließrichtung rastend in Eingriff gebracht werden kann. Die Rastfeder eines jeden Verschlusselements kann hierbei einen Rastfedervorsprung und das Steckerteil eines jeden Verschlusselements einen Eingriffsvorsprung aufweisen, wobei in der Schließstellung eines jeden Verschlusselements der Rastfedervorsprung der Rastfeder und der Eingriffsvorsprung des Steckerteils formschlüssig derart miteinander in Eingriff stehen, dass das Steckerteil entgegen der Schließrichtung an dem Gehäuseteil gehalten ist.

Die Rastfeder kann geradlinig entlang der Öffnungsrichtung erstreckt mit geradlinig entlang der Öffnungsrichtung erstrecktem Rastfedervorsprung ausgebildet sein.

Die Rastfeder kann aber auch als Ringsegment ausgebildet sein und in der Schließstellung einen Zapfen des Steckerteils in eine Umfangsrichtung um die Schließrichtung umgreifen. Um ein Öffnen des Verschlusselements durch eine Relativbewegung des Gehäuseteils relativ zu dem Steckerteil zu ermöglichen, ist die an dem Gehäuseteil angeordnete Rastfeder dann umfänglich durch eine Öffnung geöffnet, so dass das Gehäuseteil zum Öffnen des Verschlusselements zusammen mit der daran angeordneten Rastfeder entlang der Öffnungsrichtung relativ zu dem Steckerteil bewegt werden kann, sich das Steckerteil dadurch durch die Öffnung der Rastfeder bewegt und außer Eingriff mit der Rastfeder gelangt.

Die Rastfeder des ersten Verschlusselements und die Rastfeder des zweiten Verschlusselements sind beispielsweise jeweils in einer Ausnehmung des zugeordneten Gehäuseteils angeordnet und drehfest an dem Gehäuseteil gehalten. Der Abstand zwischen der Rastfeder des ersten Verschlusselements und der Rastfeder des zweiten Verschlusselements entspricht dabei in der Schließstellung in dem nicht gebogenen Zustand des biegsamen Elements dem Abstand zwischen dem Steckerteil des ersten Verschlusselements und dem Steckerteil des zweiten Verschlusselements, und entsprechend befinden sich die Rastfedern und das Steckerteil rastend miteinander in Eingriff.

Zum Öffnen eines jeden Verschlusselements kann dann durch die Relativbewegung des Gehäuseteils zum Steckerteil in die Öffnungsrichtung das Steckerteil in der Ausnehmung des Gehäuseteils verschoben werden, so dass das Steckerteil außer Eingriff mit der an dem Gehäuseteil angeordneten Rastfeder gelangt und damit aus dem Gehäuseteil entnommen werden kann, um das biegsame Element vom starren Element zu lösen. Dieses Öffnen erfolgt durch Verformung des biegsamen Elements derart, dass der Abstand zwischen den am biegsamen Element angeordneten Gehäuseteilen bzw. Steckerteilen verändert und dadurch die Steckerteile relativ zu den Gehäuseteilen bewegt werden.

Die Befestigungsanordnung ist einsetzbar zur Verbindung eines grundsätzlich beliebig gearteten starren Elements mit einem grundsätzlich beliebig gearteten biegsamen Element. Beispielsweise kann das starre Element durch einen Fahrzeugboden und das biegsame Element durch eine Fußmatte, die an dem Fahrzeugboden befestigt werden soll, ausgebildet sein. In anderer Ausgestaltung kann das starre Element beispielsweise aber auch durch einen Helm, insbesondere einen Ski-Helm, und das biegsame Element durch eine an dem Helm zu befestigende Brille oder ein Visier ausgebildet sein. Dieser Beispielkatalog ist nicht beschränkend zu verstehen. Auch grundsätzlich anders geartete Einsatzmöglichkeiten für die Befestigungsanordnung sind denkbar.

Ist das biegsame Element durch eine Brille oder ein Visier und das starre Element durch einen Helm ausgebildet, so kann das biegsame Element in Form der Brille oder des Visiers gekrümmt ausgebildet sein mit einem ersten Ende und mit einem zweiten Ende und einem zwischen dem ersten Ende und dem zweiten Ende erstreckten Randabschnitt, über den das biegsame Element an dem starren Element in Form des Helms befestigt werden soll. Das erste Verschlusselement kann hierbei in einer konkreten Ausgestaltung an dem ersten Ende und das zweite Verschlusselement an dem zweiten Ende vorgesehen sein, um über die Verschlusselemente das erste Ende und das zweite Ende des biegsamen Elements mit dem starren Element zu verbinden. Zusätzlich kann ein drittes Verschlusselement vorgesehen sein, das an dem Randabschnitt zwischen dem ersten Ende und dem zweiten Ende angeordnet ist und eine zusätzliche Befestigung an dem Randabschnitt zur Verfügung stellt.

In einer Weiterbildung ist zusätzlich eine Anzeigeeinrichtung vorgesehen, die ausgebildet ist, einen Lagezustand der Befestigungsanordnung anzuzeigen. Insbesondere ist die Anzeigeeinrichtung ausgebildet anzuzeigen, ob sich das erste Verschlusselement und/oder das zweite Verschlusselement in der Schließstellung befinden oder nicht.

Mittels einer solchen Anzeigeneinrichtung kann einem Nutzer angezeigt werden, dass das biegsame Element in richtiger, gewünschter Weise an dem starren Element angeordnet und befestigt ist. Der Nutzer erhält somit eine Rückmeldung darüber, dass der Befestigungsvorgang (also das Überführen in die Schließstellung der Verschlusselemente) in gewünschter Weise abgeschlossen worden ist. Auf diese Weise kann sichergestellt werden, dass einem Nutzer angezeigt wird, falls die Befestigung des biegsamen Elements (z. B. der Fußmatte) an dem starren Element (z. B. dem Fahrzeugboden) noch nicht oder noch nicht vollständig erfolgt ist.

In einer konkreten Ausgestaltung kann die Anzeigeneinrichtung einen elektronischen Magnetfeldsensor, insbesondere Reed-Schalter umfassen, der bei Überführen des ersten und/oder zweiten Verschlusselements in die Schließstellung aufgrund einer Wechselwirkung mit den magnetischen Mitteln betätigt wird und mit einer Messeinrichtung zum Auswerten eines Schaltzustands des Reed-Schalters verbunden ist. Bei einem Reed-Schalter handelt es sich um einen Schaltkontakt, der unter Vakuum oder Schutzgas in einen Glaskolben eingeschmolzene Kontaktzungen aufweist, die zugleich eine Kontaktfeder und einen Magnetanker bilden. Reed-Schalter sind an sich bekannt, so dass an dieser Stelle hierauf nicht näher eingegangen werden soll.

Auch andere Sensoren sind denkbar, beispielsweise ein Hall-Sensor.

Ein solcher Reed-Schalter kann beispielsweise in unmittelbarer Nähe eines an dem Steckerteil angeordneten Magneten angeordnet sein und eine Änderung des Magnetfeldes bei Annäherung eines an dem Gehäuseteil angeordneten Magneten aufnehmen, um über die Messeinrichtung ein Signal zu erzeugen, das das Überführen in die Schließstellung anzeigt.

In einer anderen konkreten, rein mechanischen Variante einer Anzeigeeinrichtung kann die Anzeigeeinrichtung ein bewegliches Bauteil umfassen, das bei Überführen des ersten und/oder zweiten Verschlusselements in die Schließstellung aufgrund einer Wechselwirkung mit den magnetischen Mitteln betätigt wird, um anzuzeigen, ob sich das erste Verschlusselement und/oder das zweite Verschlusselement in der Schließstellung befinden oder nicht. Das bewegliche Bauteil kann beispielsweise durch einen an dem Gehäuseteil angeordneten Magneten ausgebildet sein, der über eine Feder gegenüber dem Gehäuseteil vorgespannt ist. Bei Annäherung an einen Magneten des Steckerteils beim Überführen des Verschlusselements in die Schließstellung wird der Magnet des Gehäuseteils magnetisch angezogen und somit bewegt, wobei an dem Magneten eine Markierung angebracht sein kann, die das Überführen in die Schließstellung anzeigt.

Der der Erfindung zugrundeliegende Gedanke soll nachfolgend anhand der in den Figuren dargestellten Ausführungsbeispiele näher erläutert werden. Es zeigen:
- Fig. 1A: eine Draufsicht auf eine Befestigungsanordnung zum Befestigen eines biegsamen Elements in Form einer Fußmatte an einem starren Element in Form eines Fahrzeugbodens, in einer Schließstellung;
- Fig. 1B: eine Schnittansicht durch die Befestigungsanordnung entlang der Linie A - A gemäß Fig. 1 A;
- Fig. 1C: eine vergrößerte Darstellung der Ansicht gemäß Fig. 1B im Ausschnitt B;
- Fig. 2A: eine Draufsicht auf die Befestigungsanordnung beim Öffnen;
- Fig. 2B: eine Schnittansicht der Befestigungsanordnung entlang der Linie A - A gemäß Fig. 2A;
- Fig. 2C: eine vergrößerte Darstellung der Ansicht gemäß Fig. 2B im Ausschnitt B;
- Fig. 3A: eine perspektivische Explosionsansicht eines Verschlusselements der Befestigungsanordnung;
- Fig. 3B: eine andere perspektivische Explosionsansicht eines Verschlusselements der Befestigungsanordnung;
- Fig. 4: eine perspektivische Ansicht einer Befestigungsanordnung zum Befestigen eines biegsamen Elements in Form einer Brille oder eines Visiers an einem starren Element in Form eines Helms, vor dem Schließen;
- Fig. 5A: eine Seitenansicht der Anordnung gemäß Fig. 4;
- Fig. 5B: eine Schnittansicht entlang der Linie A - A gemäß Fig. 5A;
- Fig. 6A: eine Seitenansicht der Anordnung gemäß Fig. 4;
- Fig. 6B: eine Teilschnittansicht entlang der Linie B - B gemäß Fig. 6A;
- Fig. 6C: eine vergrößerte Darstellung der Ansicht gemäß Fig. 6B im Ausschnitt C;
- Fig. 7: eine perspektivische Ansicht der Anordnung in einer Schließstellung;
- Fig. 8A: eine Seitenansicht der Anordnung gemäß Fig. 7;
- Fig. 8B: eine Schnittansicht entlang der Linie A - A gemäß Fig. 8A;
- Fig. 9A: eine Seitenansicht der Anordnung gemäß Fig. 7;
- Fig. 9B: eine Teilschnittansicht entlang der Linie B - B gemäß Fig. 9A;
- Fig. 9C: eine vergrößerte Darstellung der Ansicht gemäß Fig. 9B im Ausschnitt C;
- Fig. 10: eine perspektivische Ansicht der Anordnung beim Öffnen;
- Fig. 11A: eine Seitenansicht der Anordnung gemäß Fig. 10;
- Fig. 11B: eine Schnittansicht entlang der Linie A - A gemäß Fig. 11 A;
- Fig. 12A: eine Seitenansicht der Anordnung gemäß Fig. 10;
- Fig. 12B: eine Teilschnittansicht entlang der Linie B - B gemäß Fig. 12A;
- Fig. 12C: eine vergrößerte Darstellung der Ansicht gemäß Fig. 12B im Ausschnitt C;
- Fig. 13: eine Ansicht eines gegenüber dem Ausführungsbeispiels nach Fig. 1 bis 3 modifizierten Ausführungsbeispiels mit einer Anzeigeeinrichtung zum Anzeigen, ob sich das erste Verschlusselement in der Schließstellung befindet oder nicht, und
- Fig. 14: eine Ansicht eines weiteren gegenüber dem Ausführungsbeispiels nach Fig. 1 bis 3 modifizierten Ausführungsbeispiels mit einer Anzeigeeinrichtung zum Anzeigen, ob sich das erste Verschlusselement in der Schließstellung befindet oder nicht.

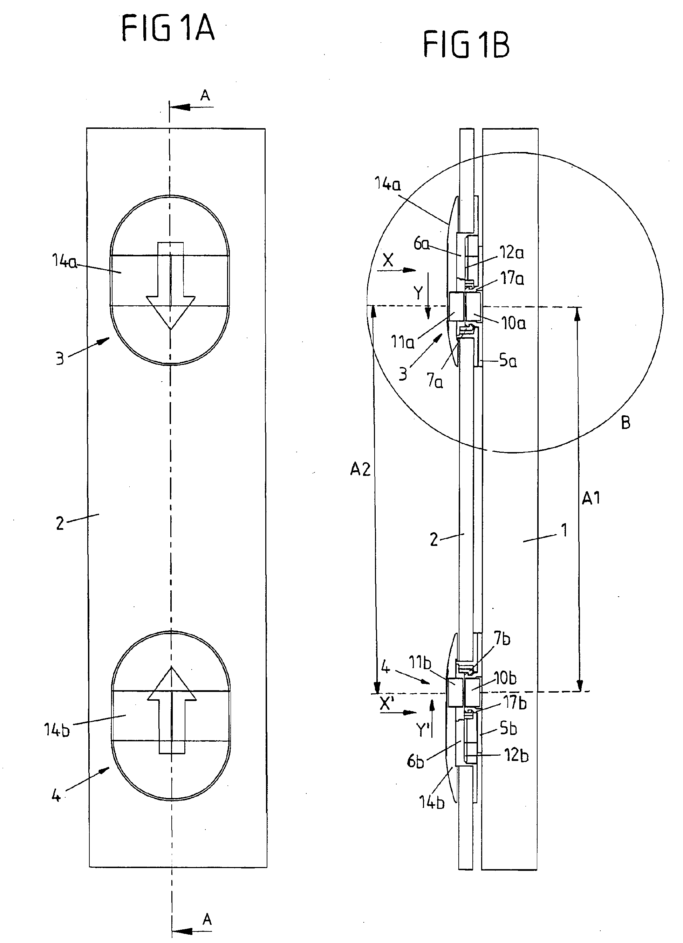

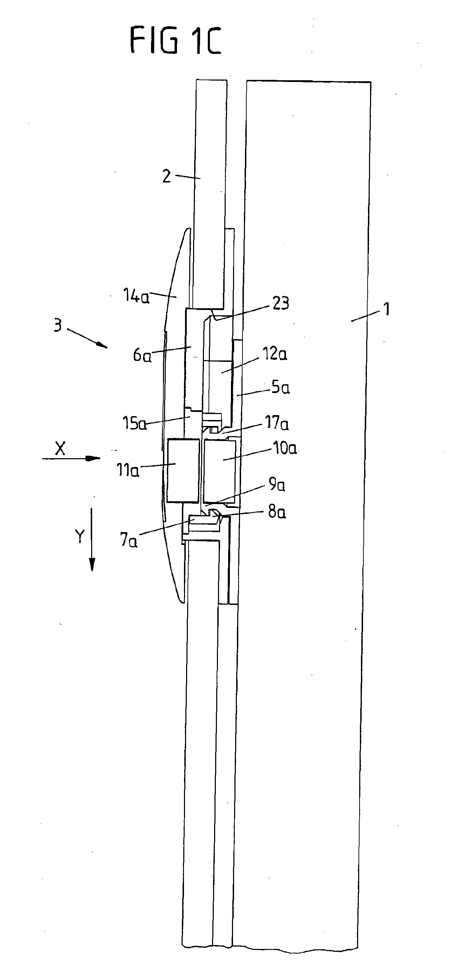

Fig. 1 bis 3 zeigen ein erstes Ausführungsbeispiel einer Befestigungsanordnung zum Befestigen eines starren Elements in Form eines Fahrzeugbodens 1 mit einem biegsamen Element in Form einer Fußmatte 2.

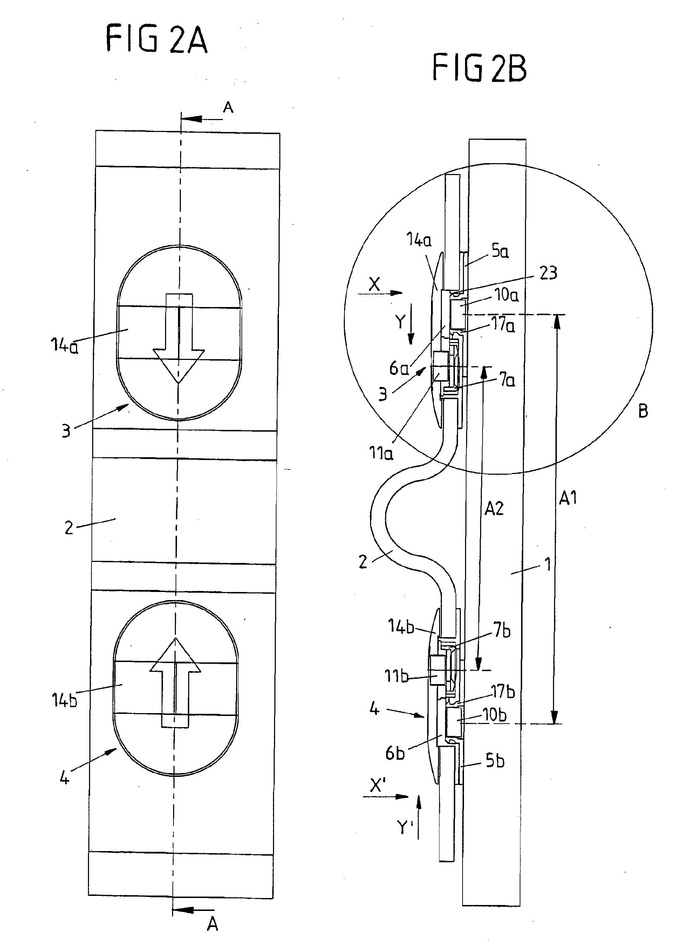

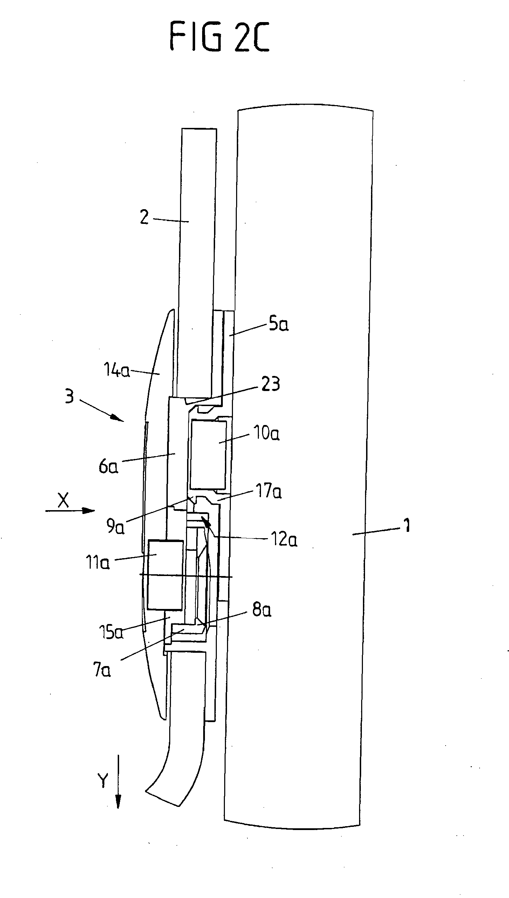

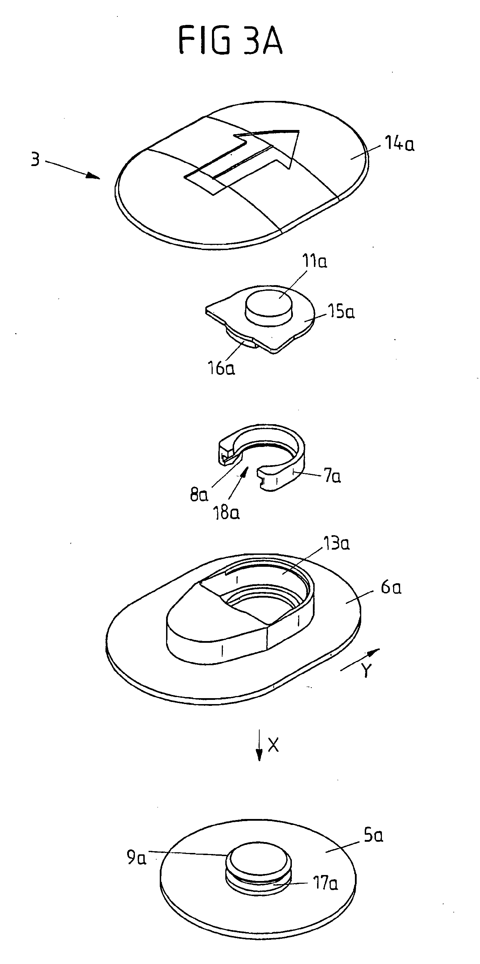

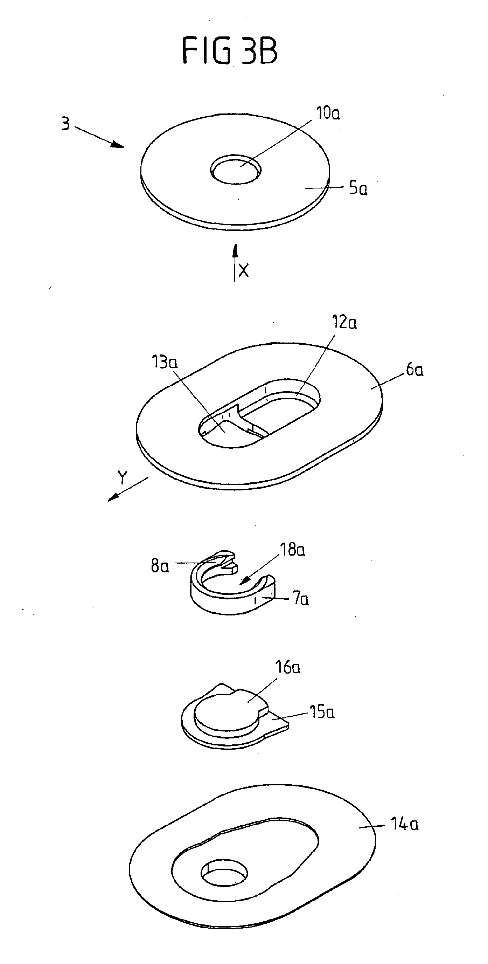

Die Befestigungsanordnung weist zwei Verschlusselemente 3, 4 auf, die zur Befestigung der Fußmatte 2 an zwei Punkten mit dem Fahrzeugboden 1 dienen. Fig. 1A und 1B zeigen die Befestigungsanordnung in einer Schließstellung, in der die Fußmatte 2 an dem Fahrzeugboden 1 befestigt ist und die Verschlusselemente 3, 4 jeweils geschlossen sind. Fig. 2A bis 2C zeigen die Befestigungsanordnung beim Öffnen, um die Fußmatte 2 vom Fahrzeugboden 1 lösen und von dem Fahrzeugboden 1 entnehmen zu können. Fig. 3A und 3B zeigen Explosionsansichten eines einzelnen Verschlusselements 3.

Die Fußmatte 2 wird über die zwei Verschlusselemente 3, 4 mit dem Fahrzeugboden 1 verbunden. Die Verschlusselemente 3, 4 sind dabei baugleich und in ihrer Funktionsweise identisch, unterscheiden sich aber in ihrer Anordnung, wie nachfolgend noch erläutert werden soll.

Jedes Verschlusselement 3, 4 weist die in Fig. 3A und 3B dargestellten Komponenten auf. Der Aufbau und die Funktion der Verschlusselemente 3, 4 soll nachfolgend anhand des in Fig. 1 B und 2B oben dargestellten, ersten Verschlusselements 3 erläutert werden.

Das Verschlusselement 3 weist ein an der Fußmatte 2 angeordnetes Gehäuseteil 6a und ein an dem Fahrzeugboden 1 fest angeordnetes Steckerteil 5a auf. An dem Gehäuseteil 6a ist eine Rastfeder 7a über ein Einsatzteil 15a drehfest angeordnet. Die Rastfeder 7a ist hierbei über eine Öffnung 13a in eine Ausnehmung 12a des Gehäuseteils 6a eingesetzt und über das Einsatzteil 15a gehalten, indem die Rastfeder 7a an einem Vorsprung 16a des Einsatzteils 15a zu liegen kommt und das Einsatzteil 15a die Öffnung 13a in montiertem Zustand verschließt. Der Vorsprung 16a durchgreift hierbei auf formschlüssige Weise eine die Rastfeder 7a umfänglich öffnende Öffnung 18a und hält auf diese Weise die Rastfeder 7a in Umfangsrichtung um die Schließrichtung X drehfest.

Die Rastfeder 7a ist ausgestaltet nach Art eines Ringsegments und weist einen Rastfedervorsprung 8a auf, der an einer aus der Ausnehmung 12a heraus weisenden, äußeren Kante der Rastfeder 7a ausgebildet ist und abschnittsweise um die Rastfeder 7a umläuft. Die Rastfeder 7a ist ausgebildet, mit einem Zapfen 17a des Steckerteils 5a rastend in Eingriff gebracht zu werden, so dass in einer Schließstellung der Zapfen 17a mit einem Eingriffsvorsprung 9a formschlüssig mit dem Rastfedervorsprung 8a der Rastfeder 7a in Eingriff steht und damit an dem Gehäuseteil 6a gehalten ist.

Um das Verschlusselement 3 in seine Schließstellung zu überführen, wird das Gehäuseteil 6a mit dem daran angeordneten Rastelement 7a in eine Schließrichtung X an den Zapfen 17a des Steckerteils 5a angesetzt, so dass die Rastfeder 7a mit ihrem Rastfedervorsprung 8a rastend mit dem Eingriffsvorsprung 9a des Zapfens 17a in Eingriff·gelangt. Die Rastfeder 7a ist in der Ebene quer zur Schließrichtung X elastisch federnd ausgebildet und kann somit ausweichen, wenn sie an den Zapfen 17a angesetzt und durch diesen quer zur Schließrichtung X gespreizt wird.

Um das Verschlusselement 3 aus der Schließstellung heraus öffnen zu können, ist die Rastfeder 7a umfänglich offen ausgebildet mit der Öffnung 18a. Diese Öffnung 18a ist so gestaltet, dass die Rastfeder 7a in der Schließstellung den Zapfen 17a umfänglich soweit umgreift, dass der Zapfen 17a auch in der Ebene quer zur Schließrichtung X an der Rastfeder 7a gehalten ist. Aufgrund der Öffnung 18a kann jedoch das Gehäuseteil 6a zusammen mit der Rastfeder 7a in eine Öffnungsrichtung Y, die senkrecht zur Schließrichtung X gerichtet ist, relativ zu dem Steckerteil 5a mit dem Zapfen 17a bewegt werden, um den Zapfen 17a - unter elastischem Aufweiten der Rastfeder 7a quer zur Schließrichtung X - durch die Öffnung 18a außer Eingriff mit der Rastfeder 7a zu bringen. Der Zapfen 17a wird hierdurch in der Ausnehmung 12a des Gehäuseteils 6a bewegt und kann, wenn er außer Eingriff mit der Rastfeder 7a gebracht worden ist, aus der Ausnehmung 12a entfernt werden.

An dem Gehäuseteil 6a einerseits und an dem Steckerteil 5a andererseits sind magnetische Mittel in Form zweier Magnete 10a, 11a vorgesehen, die sich bei Ansetzen des Gehäuseteils 6a in die Schließrichtung X an das Steckerteil 5a magnetisch anziehend gegenüberstehen und somit das Überführen des Verschlusselements 3 in die Schließstellung magnetisch unterstützen.

Ein Magnet 10a ist hierbei an dem Zapfen 17a des Steckerteils 5a angeordnet, während ein anderer Magnet 11a an dem Einsatzteil 15a des Gehäuseteils 6a befestigt ist. Die Magnete 10a, 11 a können zusammen mit der Rastfeder 7a so abgestimmt und dimensioniert sein, dass die Rastfeder 7a bei Ansetzen des Gehäuseteils 6a an das Steckerteil 5a weitestgehend selbsttätig mit dem Zapfen 17a rastend in Eingriff gelangt, so dass das Überführen in die Schließstellung einfach und weitestgehend selbsttätig erfolgen kann.

Während das Steckerteil 5a an dem Fahrzeugboden 1 (siehe z. B. Fig. 1 B) angeordnet ist, ist das Gehäuseteil 6a an der Fußmatte 2 befestigt. Das Gehäuseteil 6a durchgreift hierzu, wie beispielsweise in Fig. 1 B dargestellt ist, eine Öffnung 23 der Fußmatte 2 und ist rastend oder klebend mit einem Deckel 14a verbunden, wobei sowohl das Gehäuseteil 6a als auch der Deckel 14a Randabschnitte aufweisen, die den Rand der Öffnung 23 der Fußmatte 2 übergreifen und somit das Gehäuseteil 6a an der Fußmatte 2 fixieren.

Zur Befestigung der Fußmatte 2 an dem Fahrzeugboden 1 sind zwei Verschlusselemente 3, 4 vorgesehen, wie in Fig. 1A bis 1C und 2A bis 2C dargestellt. Jedes Verschlusselement weist dabei ein Gehäuseteil 6a, 6b und ein Steckerteil 5a, 5b auf. Das Gehäuseteil 6a, 6b ist hierbei an der Fußmatte 2 und das Steckerteil 5a, 5b an dem Fahrzeugboden 1 angeordnet.

Fig. 1A bis 1C zeigen die Befestigungsanordnung mit den beiden Verschlusselementen 3, 4 zunächst in ihrer Schließstellung, in der die Fußmatte 2 an dem Fahrzeugboden 1 befestigt ist. In dieser Schließstellung ist jedes Verschlusselement 3, 4 geschlossen, indem der Zapfen 17a, 17b des Steckerteils 5a, 5b mit der Rastfeder 7a, 7b des Gehäuseteils 6a, 6b rastend in Eingriff steht.

Zum Herstellen dieser Schließstellung ist die Fußmatte 2 zusammen mit den daran angeordneten Gehäuseteilen 6a, 6b jeweils in eine Schließrichtung X (Verschlusselement 3) bzw. X' (Verschlusselement 4) an das zugeordnete Steckerteil 5a, 5b angesetzt worden. Die Schließrichtungen X, X' des ersten Verschlusselements 3 und des zweiten Verschlusselements 4 sind hierbei parallel zueinander gerichtet, und das Ansetzen der Gehäuseteile 6a, 6b an die Steckerteile 5a, 5b erfolgt bei bestimmungsgemäßem Einlegen der Fußmatte 2, also im Wesentlichen bei unverformter Fußmatte 2, so dass zum Herstellen der Schließstellung die Gehäuseteile 6a, 6b zusammen mit den daran angeordneten Rastfedern 7a, 7b in eine den Steckerteilen 5a, 5b mit den daran angeordneten Zapfen 17a, 17b gegenüberliegende Lage gebracht und die Rastfedern 7a, 7b mit den Zapfen 17a, 17b in Eingriff gebracht werden können. In der Schließstellung ist entsprechend der Abstand A1 zwischen den Zapfen 17a, 17b der Steckerteile 5a, 5b gleich dem Abstand A2 zwischen den Rastfedern 7a, 7b (hierunter ist zu verstehen, dass die durch das Zentrum weisenden Mittenachsen der Zapfen 17a, 17b und die durch das Zentrum weisenden Mittenachsen der Rastfedern 7a, 7b einen gleichen Abstand zueinander aufweisen).

Die Verschlusselemente 3, 4 sind entgegengesetzt zueinander ausgerichtet, indem die Gehäuseteile 6a, 6b spiegelsymmetrisch an der Fußmatte 2 angeordnet und befestigt sind. So weist die Öffnungsrichtung Y des ersten Verschlusselements 3, in die das Gehäuseteil 6a zum Lösen des Zapfens 17a aus der Rastfeder 7a zu bewegen ist, entgegengesetzt, also antiparallel zu der Öffnungsrichtung Y' des zweiten Verschlusselements 4, in die das Gehäuseteil 6b des zweiten Verschlusselements 4 zum Lösen des Zapfens 17b aus der Rastfeder 7b zu bewegen ist. Zum Öffnen der Befestigungsanordnung muss somit, wie in Fig. 2B dargestellt, die Fußmatte 2 verformt werden, um die Gehäuseteile 6a, 6b in die jeweilige Öffnungsrichtung Y, Y' aufeinander zu zu bewegen und dadurch die Zapfen 17a, 17b der Steckerteile 5a, 5b in den Ausnehmungen 12a, 12b außer Eingriff mit den Rastfedern 7a, 7b zu bringen.

Das Öffnen kann beispielsweise dadurch bewirkt werden, dass an einem zentralen, zwischen den Verschlusselementen 3, 4 gelegenen Punkt der Fußmatte 2 entgegen den Schließrichtungen X, X' gezogen wird, um eine Verformung der Fußmatte 2 nach der in Fig. 2B dargestellten Art und damit ein Verschieben der Gehäuseteile 6a, 6b relativ zu den Steckerteilen 5a, 5b zu bewirken. Zum Öffnen wird somit der Abstand A2 zwischen den Rastfedern 7a, 7b verkleinert, so dass dieser Abstand A2 nicht mehr dem Abstand A1 zwischen den Zapfen 17a, 17b der Steckerteile 5a, 5b entspricht.

Sind die Zapfen 17a, 17b außer Eingriff mit den Rastfedern 7a, 7b gebracht, so kann die Fußmatte 2 mit den daran angeordneten Gehäuseteilen 6a, 6b entgegen den Schließrichtungen X, X' von dem Fahrzeugboden 1 entnommen werden.

Mit einer solchen Befestigungsanordnung ist ein unbeabsichtigtes Lösen nicht oder nur schwer möglich. Die Befestigungsanordnung hält die Fußmatte 2 in der Schließstellung sicher und fest an dem Fahrzeugboden 1 und kann nur durch ein bewusstes Verformen nach der in Fig. 2B dargestellten Art von dem Fahrzeugboden 1 gelöst werden. Dadurch, dass an den Verschlusselementen 3, 4 jeweils magnetische Mittel in Form von Magneten 10a, 10b, 11a, 11 b vorgesehen sind, erfolgt das Überführen in die Schließstellung der Verschlusselement 3, 4, also das Befestigen der Fußmatte 2 an dem Fahrzeugboden 1, zudem weitestgehend selbsttätig, so dass die Fußmatte 2 in einfacher und sicherer Weise an dem Fahrzeugboden 1 festgelegt werden kann und das Risiko für eine nicht vollständige oder nicht korrekte Befestigung an dem Fahrzeugboden. 1 wesentlich reduziert ist.

Die magnetischen Mittel 10a, 11a des ersten Verschlusselements 3 und die magnetischen Mittel 10b, 11 b des zweiten Verschlusselements 4 können hierbei umgekehrt zueinander polarisiert sein, so dass ein falsches Ansetzen beispielsweise des Gehäuseteils 6a des ersten Verschlusselements 3 an das Steckerteil 5b des zweiten Verschlusselements 4 dadurch erschwert ist, dass zwischen dem Magneten 11a des Gehäuseteils 6a und dem Magneten 10b des Steckerteils 5b eine magnetische Abstoßungskraft beim Annähern des Gehäuseteils 6a an das Steckerteil 5b besteht, die für einen Nutzer spürbar ist und damit auf ein falsches Ansetzen hinweist.

Wie aus Fig. 1A und 2A ersichtlich, können die Deckel 14a, 14b der Verschlusselemente 3, 4 an ihrer vom Fahrzeugboden 1 abgewandten, nach außen sichtbaren Seite mit Pfeilen bedruckt oder anderweitig versehen sein, die die Öffnungsrichtung Y, Y' zum Öffnen der Verschlusselemente 3, 4 anzeigen.

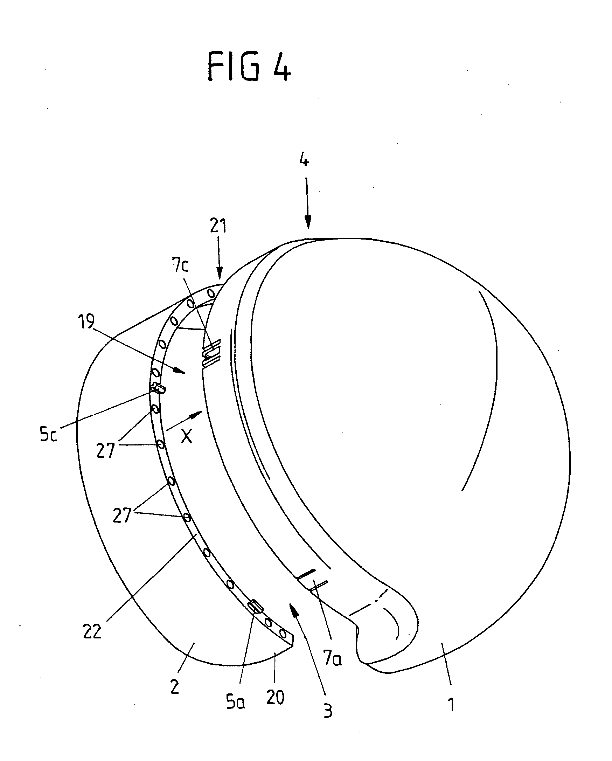

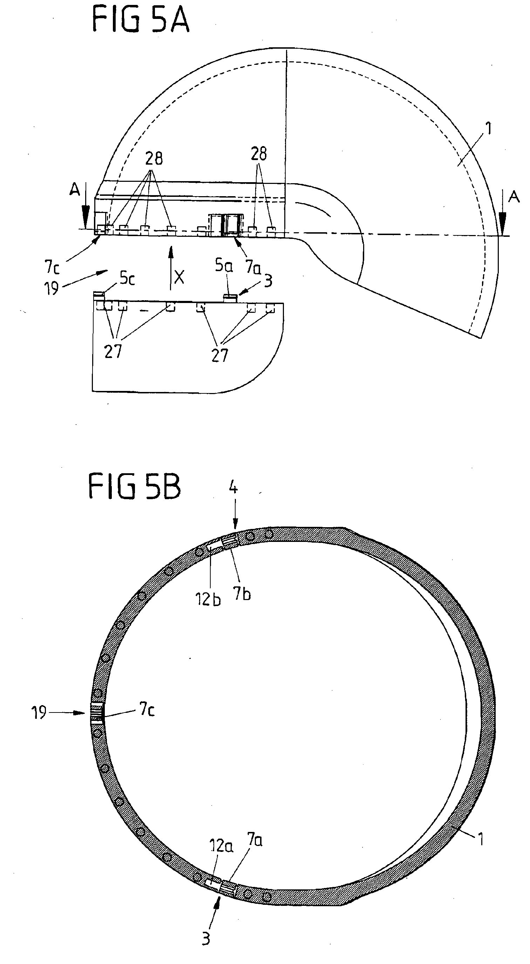

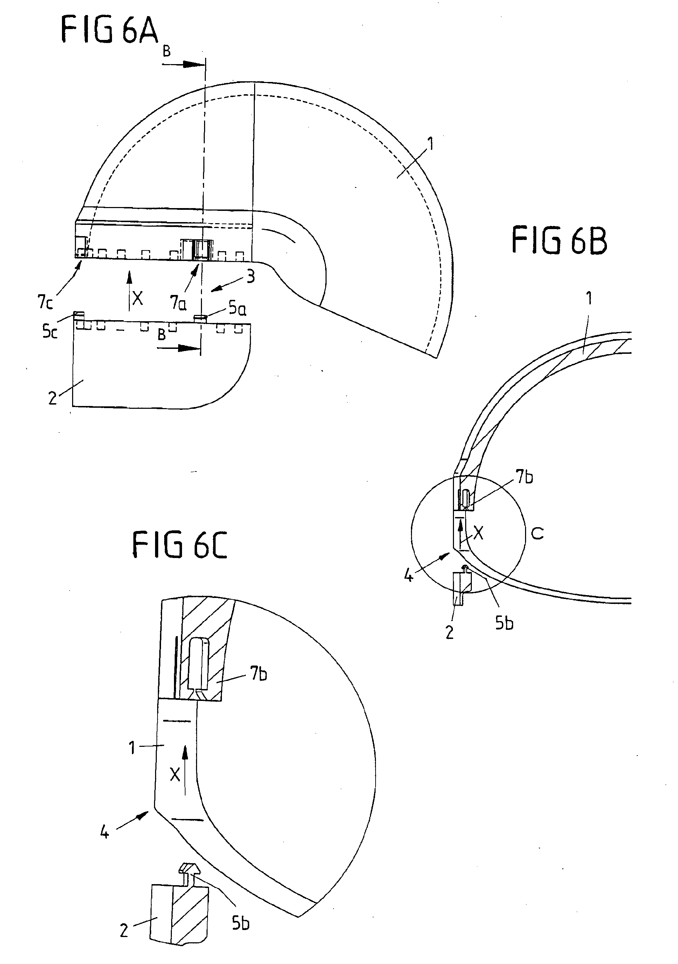

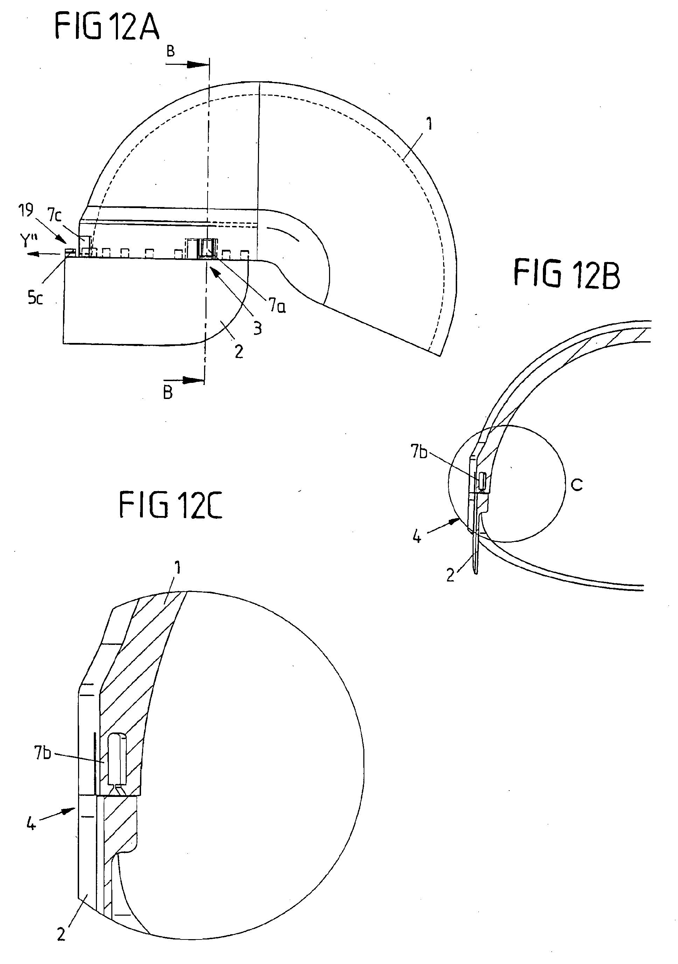

Fig. 4 bis 12 zeigen ein weiteres Ausführungsbeispiel einer Befestigungsanordnung zum Verbinden eines starren Elements in Form eines Helms 1 und eines biegsamen Elements in Form einer Brille oder eines Visiers 2.

Wiederum wird die Befestigung des biegsamen Elements 2 an dem starren Element 1 über Verschlusselemente 3, 4, 19 hergestellt, die in ihrem Funktionsprinzip dem vorangehend geschilderten Ausführungsbeispiel gleichen. Bauteile gleicher Funktion sollen daher, soweit zweckdienlich, mit gleichen Bezugszeichen versehen werden.

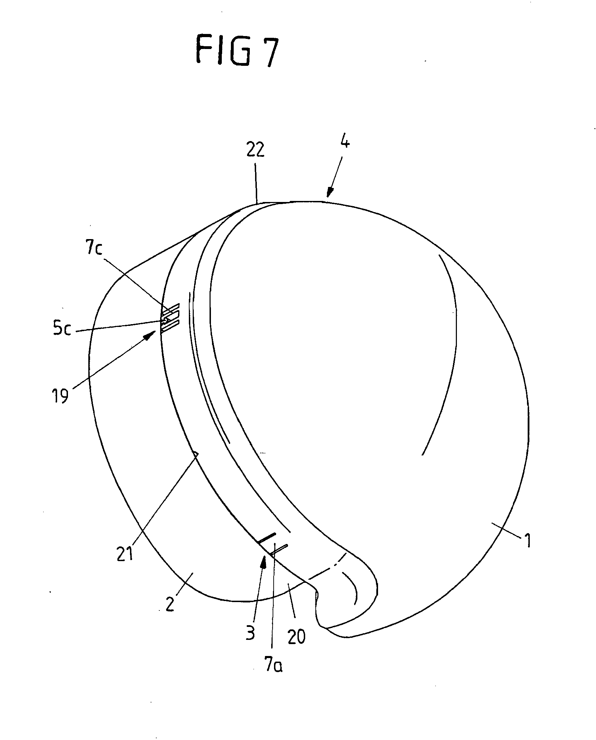

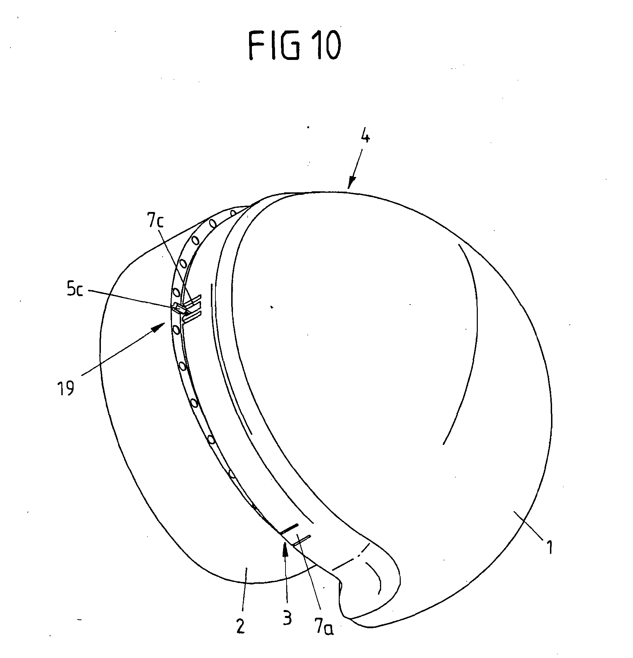

In Fig. 4 bis 6 sind der Helm 1 und die Brille 2 (nachfolgend soll durchgehend der Begriff "Brille" verwendet werden, synonym für eine Brille oder ein Visier) im nicht verbundenen Zustand dargestellt. In Fig. 7 bis 9 ist die Brille 2 mit dem Helm 1 in einer Schließstellung verbunden. Fig. 10 bis 10 zeigen den Helm 1 und die Brille 2 beim Lösen der Brille 2.

Bei der Befestigungsanordnung gemäß Fig. 4 bis 12 sind drei Verschlusselemente 3, 4, 19 vorgesehen, die dazu dienen, die Brille 2 mit dem Helm 1 zu verbinden. Zur Ausbildung der Verschlusselemente 3, 4, 19 sind dabei an dem Helm 1 Rastfedern 7a, 7b, 7c einstückig angeformt. Die Gehäuseteile der Verschlusselemente 3, 4, 19 sind hierbei durch den Helm 1 selbst ausgebildet und somit einstückig mit dem Helm 1 gebildet. An der Brille 2 sind Steckerteile 5a, 5b, 5c angeordnet, die entlang einer Schließrichtung X an die Rastfedern 7a, 7b, 7c angesetzt und mit diesen rastend in Verbindung gebracht werden können.

Die drei Verschlusselemente 3, 4, 19 dienen dazu, die Brille 2 an zwei Enden 20, 21 und an einem Randabschnitt 22 zwischen den Enden 20, 21 mit dem Helm 1 zu verbinden. Die Steckerteile 5a, 5b, 5c sind hierzu an dem Randabschnitt 22 angeordnet und stehen von diesem in Richtung des Helms 1 vor, wobei die Steckerteile 5a, 5b im Bereich der Enden 20, 21 der Brille 2 angeordnet sind, während das Steckerteil 5c an dem Randabschnitt 22 mittig zwischen den Steckerteilen 5a, 5b ausgebildet ist.

Zum Befestigen der Brille 2 an dem Helm 1 wird die Brille 2 aus dem in Fig. 4, 5A, 5B, und 6A bis 6C dargestellten geöffneten Zustand in die Schließrichtung X an den Helm 1 angesetzt, so dass die Steckerteile 5a, 5b, 5c rastend mit den Rastfedern 7a, 7b, 7c in Eingriff gelangen.

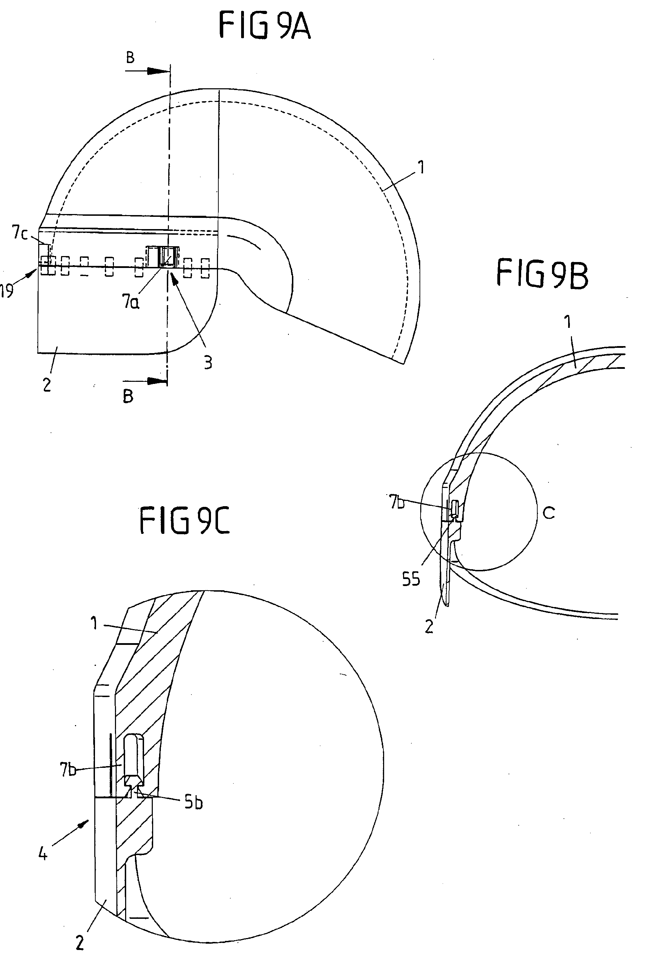

Fig. 7, 8A, 8B und 9A bis 9C zeigen den Helm 1 mit daran befestigter Brille 2. Wie insbesondere der Schnittansicht gemäß Fig. 9C zu entnehmen ist, stehen in dieser Schließstellung die Steckerteile 5a, 5b, 5c rastend und formschlüssig mit den Rastfedern 7a, 7b, 7c in Eingriff, so dass die Brille 2 nicht entgegen der Schließrichtung X von dem Helm 1 entnommen werden kann.

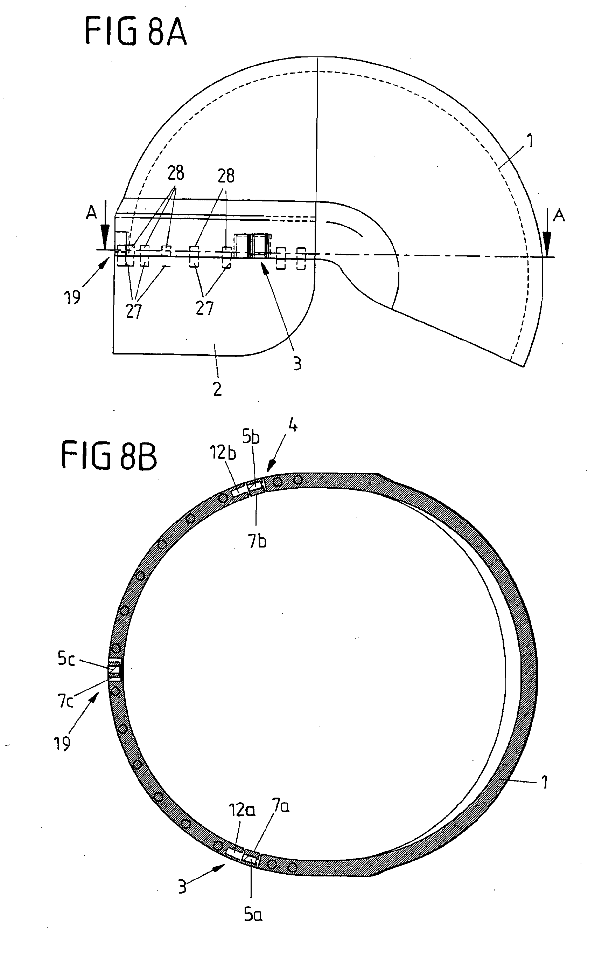

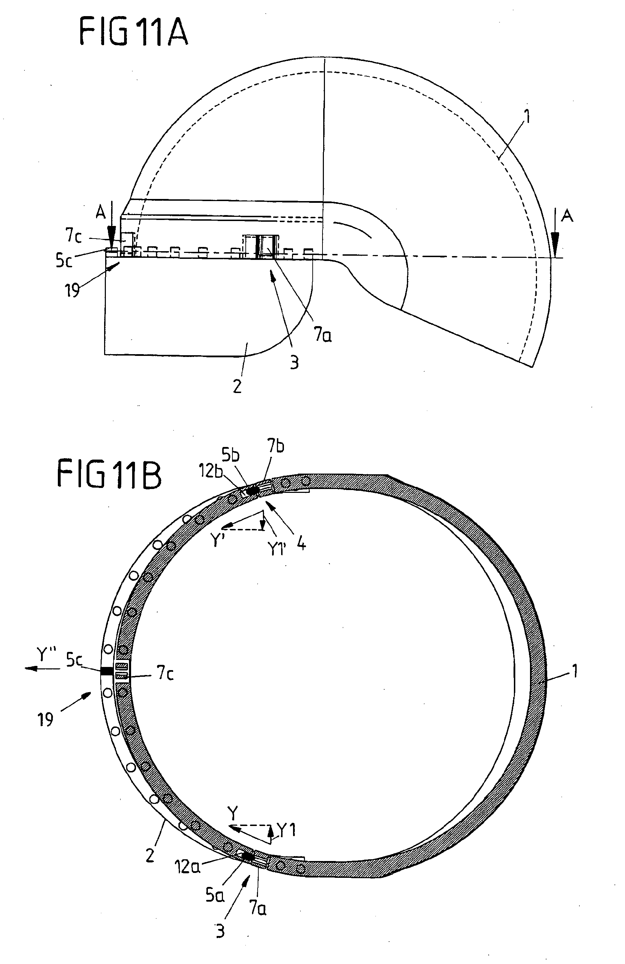

Zum Öffnen können die Steckerteile 5a, 5b der Verschlusselemente 3, 4 relativ zu den Rastfedern 7a, 7b in eine Ausnehmung 12a, 12b verschoben werden (siehe Fig. 8B und 11 B), indem die Rastfedern 7a, 7b und die Steckerteile 5a, 5b, wie in Fig. 11 B dargestellt, in eine Öffnungsrichtung Y (Verschlusselement 3) bzw. eine Öffnungsrichtung Y' (Verschlusselement 4) bewegt werden. Diese Öffnungsrichtungen Y, Y' der Verschlusselemente 3, 4 sind schräg zueinander gerichtet und weisen mit einer Richtungskomponente Y1, Y1' aufeinander zu.

Dadurch, dass die Steckerteile 5a, 5b relativ zu den Rastfedern 7a, 7b der Verschlusselemente 3, 4 in die Öffnungsrichtungen Y bzw. Y' bewegt werden, wird gleichzeitig auch das Steckerteil 5c des dritten Verschlusselements 19 relativ zu der Rastfeder 7c in eine Öffnungsrichtung Y" bewegt und aus der Rastfeder 7c verschoben. Sind die Steckerteile 5a, 5b der Verschlusselemente 3, 4 vollständig in die Ausnehmungen 12a, 12b eingeschoben, so ist auch das Steckerteil 5c des dritten Verschlusselements 19 aus der zugeordneten Rastfeder 7c herausgeschoben, so dass die Brille 2 von dem Helm 1 entnommen werden kann.

Zum Unterstützen des Überführens der Brille 2 in ihre Schließstellung an den Helm 1 können an den Verschlusselementen 3, 4, 19 wiederum, wie vorangehend anhand des Ausführungsbeispiels gemäß Fig. 1 bis 3 erläutert, magnetische Mittel 27, 28 vorgesehen sein, die eine magnetische Anziehungskraft zwischen den Steckerteilen 5a, 5b, 5c und den Rastfedern 7a, 7b, 7c in die Schließrichtung X bewirken, so dass das Überführen der Steckerteile 5a, 5b, 5c in ihre mit den Rastfedern 7a, 7b, 7c verrastete Stellung weitestgehend selbsttätig erfolgen kann.

Die magnetischen Mittel 27, 28 sind in Form von Magneten oder einerseits eines Magneten und andererseits eines magnetischen Ankers aus einem ferromagnetischen Material ausgebildet und einerseits an dem Randabschnitt 22 der Brille 2 und andererseits an dem Helm 1 angeordnet. Jeweils ein Magnet (oder magnetischer Anker) an dem Randabschnitt 22 ist dabei einem Magneten (oder magnetischen Anker) an dem Helm 1 zugeordnet. Die magnetischen Mittel 27, 28 bewirken eine magnetische Anziehungskraft in Richtung eines Schließens der Befestigungsanordnung.

Dadurch, dass die magnetischen Mittel 27, 28 räumlich getrennt von den Steckerteilen 5a, 5b, 5c und den Rastfedern 7a, 7b, 7c angeordnet sind, wird eine dünne Bauweise der Brille 2 und des Helms 1 möglich.

Die Anzahl der die magnetischen Mittel 27, 28 verwirklichenden Magnetpaare (oder der aus jeweils einem Magneten an dem einen Bauteil und einem zugeordneten magnetischen Anker an dem anderen Bauteil bestehenden Paare) kann sich unterscheiden von der Anzahl der Verschlusselemente 3, 4, 19.

Eine Befestigungsanordnung mit Verschlusselementen 3, 4, 19 und räumlich davon getrennten magnetischen Mitteln 27, 28 kann allgemein auch vorteilhaft zur Ausbildung eines Flächenverschlusses eingesetzt werden, mit dem zwei Flächen aneinander befestigt werden sollen. Die Anzahl der Magnetpaare (oder der aus jeweils einem Magneten an dem einen Bauteil und einem zugeordneten magnetischen Anker an dem anderen Bauteil bestehenden Paare) kann dabei größer, gleich oder kleiner als die Anzahl der Verschlusselemente 3, 4, 19 sein.

Die das biegsame Element verwirklichende Brille 2 ist vorzugsweise elastisch ausgebildet. In ihrer Ausgangsstellung, die die Brille 2 zum Ansetzen an den Helm 1 einnimmt (siehe Fig. 4), ist die Brille 2 dabei entspannt, so dass sie ohne Weiteres in die Schließrichtung X an den Helm 1 angesetzt und die Steckerteile 5a, 5b, 5c rastend mit den Rastfedern 7a, 7b, 7c in Eingriff gebracht werden können.

Zum Bewegen der Steckerteile 5a, 5b in die Öffnungsrichtungen Y, Y' muss die Brille 2 dann elastisch verformt werden, damit die Steckerteile 5a, 5b in die Ausnehmungen 12a, 12b eingeschoben werden können, so dass die Brille 2 zum Öffnen elastisch verspannt wird.

Die zum elastischen Verspannen der Brille 2 erforderliche Kraft, die zum Öffnen aufgebracht werden muss, bewirkt, dass einem unbeabsichtigten Lösen der Brille 2 entgegengewirkt wird. Denn bei einem Verspannen der Brille 2 wirkt eine elastische Rückstellkraft immer zurück in die Schließstellung (siehe Fig. 8B), so dass nur durch ein bewusstes Verformen der Brille 2 und ein Öffnen in der in Fig. 11 B dargestellten Weise die Verbindung der Brille 2 mit dem Helm 1 gelöst werden kann.

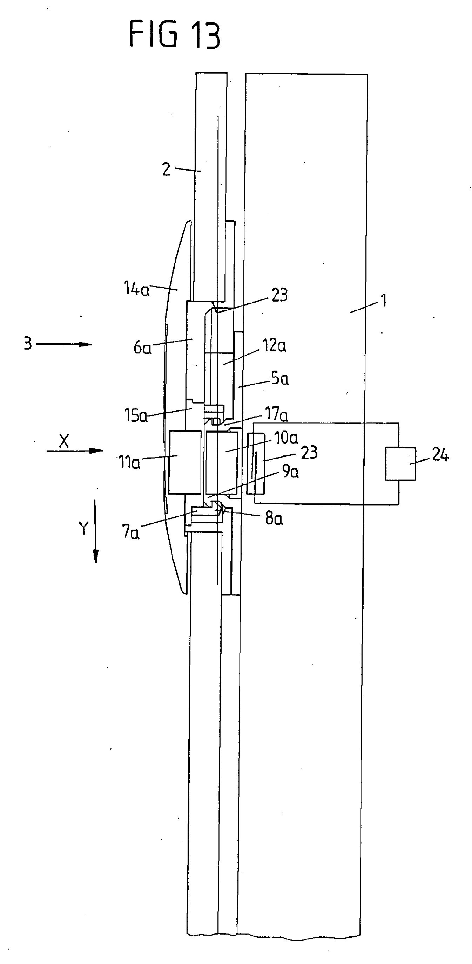

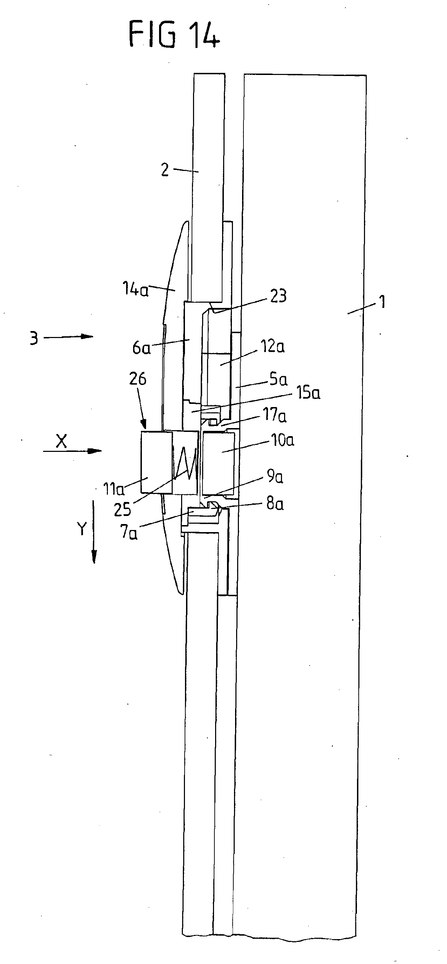

Fig. 13 und 14 zeigen zwei Ausführungsbeispiele einer Kombination eines Verschlusselements 3 mit einer Anzeigeeinrichtung zum Anzeigen, ob sich die Befestigungsanordnung in der Schließstellung befindet oder nicht.

Fig. 13 und 14 zeigen dabei jeweils eine der Fig. 1 C entsprechende Ansicht, darstellend ein Verschlusselement 3 zum Verbinden einer Fußmatte 2 mit einem Fahrzeugboden 1. Zusätzlich ist eine Anzeigeeinrichtung vorgesehen, die bei dem Ausführungsbeispiel gemäß Fig. 13 durch einen Reed-Schalter 23 und eine Messeinrichtung 24 und bei dem Ausführungsbeispiel gemäß Fig. 14 durch den beweglich angeordneten Magneten 11a gebildet ist.

Bei dem Ausführungsbeispiel gemäß Fig. 13 ist der Reed-Schalter 23 in unmittelbarer Nähe des Magneten 10a an dem Steckerteil 5a des Verschlusselements 3 angeordnet. Der Reed-Schalter 23 ist hierbei dazu ausgebildet, anhand der Stärke und/oder der besonderen Gestalt des magnetischen Feldes zwischen den magnetischen Mitteln in Form der Magnete 10a, 11 a am Steckerteil 5a einerseits und am Gehäuseteil 6a andererseits die Schließstellung und eine Öffnungsstellung bei voneinander getrenntem Steckerteil 5a und Gehäuseteil 6a zu unterscheiden.

Bei Überführen des Verschlusselements 3 in die Schließstellung und einer entsprechenden Annäherung des Gehäuseteils 6a mit dem daran angeordneten Magneten 11 a an das Steckerteil 5a mit dem daran angeordneten Magneten 10a schaltet der Reed-Schalter 23, was durch die Messeinrichtung 24 aufgenommen und in ein entsprechendes Signal zum Anzeigen des Erreichens der Schließstellung umgesetzt wird.

Bei dem Ausführungsbeispiel gemäß Fig. 14 ist die Anzeigeeinrichtung rein mechanisch verwirklicht, Hierzu ist der Magnet 11a an dem Gehäuseteil 6a entlang der Schließrichtung X beweglich angeordnet und über eine Feder 25 gegen das Gehäuseteil 6a vorgespannt. In einer Öffnungsstellung befindet sich aufgrund der Vorspannung der Magnet 11a in einer ausgefahrenen Stellung. Wird das Gehäuseteil 6a zum Überführen des Verschlusselements 3 in die Schließstellung dem Steckerteil 5a angenähert, so ziehen sich die Magnete 10a, 11a an, und der bewegliche Magnet 11a wird in Richtung des Magneten 10a in das Gehäuseteil 6a eingefahren. Durch eine entsprechende Markierung an einer Seitenfläche 26 des Magneten 11a, beispielsweise eine Farbmarkierung, kann dann das Erreichen der Schließstellung in geeigneter Weise angezeigt werden.

Die Anzeigeeinrichtung zur Lagezustandsanzeige kann auch durch andere Mittel verwirklicht werden. Beispielsweise kann im Steckerteil 5a ein erster Magnet 10a und im Gehäuseteil 6a ein zweiter Magnet 11a fest angeordnet sein, die sich gegenseitig anziehen. Zusätzlich kann am Gehäuseteil 6a dann ein weiterer Magnet polverkehrt auf der Rückseite des zweiten Magneten 11a beweglich gelagert sein, der über eine Rückstellfeder gegenüber dem zweiten Magneten 11a vorgespannt ist. Bei Erreichen der Schließstellung verstärkt sich das magnetische Feld auf der Rückseite des zweiten Magneten 11a, und der weitere Magnet wird demzufolge stärker gegen die Rückstellfeder gedrückt, so dass aufgrund der Veränderung der Lage des weiteren Magneten die Schließstellung angezeigt wird.

Eine Lagezustandsanzeige durch Verwendung einer geeigneten Anzeigevorrichtung ist grundsätzlich nicht auf eine Befestigungsanordnung der hier gezeigten Art beschränkt, sondern kann auch bei beliebigen anderen Verschlusselementen und Verschlussvorrichtungen. So kann eine Anzeigeeinrichtung der hier beschriebenen Art bei jeglicher Verschlussvorrichtung eingesetzt werden, wie sie beispielsweise aus der WO 2008/006 357 A2, der WO 2009/092 368 A2, der WO 2010/006 594 A2, der WO 2008/006 354 A2, der WO 2008/006 356 A2, der WO 2009/010 049 A2 und der WO 2009/127 96 A2, deren Inhalt in die vorliegende Anmeldung mit einbezogen werden soll, bekannt sind. Die Verwendung einer solchen Anzeigevorrichtung im Zusammenhang mit einer Verschlussvorrichtung, wie sie aus diesen Schriften bekannt ist, stellt insofern einen eigenständigen erfinderischen Gedanken dar.

Eine solche Verschlussvorrichtung kann beispielsweise allgemein ein Steckerteil, ein Gehäuseteil und eine Rastung aufweisen, wobei
- die Verschlussvorrichtung zu verschließen ist, indem das Gehäuseteil und das Steckerteil in eine Schließrichtung aneinander angesetzt werden, so dass das Steckerteil und das Gehäuseteil in einer Schließstellung entgegen der Schließrichtung durch die Rastung aneinander gehalten sind, und
- das Gehäuseteil so ausgebildet ist, dass durch eine Relativbewegung des Gehäuseteils relativ zu dem Steckerteil in eine Öffnungsrichtung, die sich von der Schließrichtung unterscheidet, das Steckerteil aus der Rastung geschoben und das Verschlusselement damit geöffnet werden kann.

Bei einer solchen Verschlussvorrichtung ist eine Anzeigeeinrichtung vorgesehen zum Anzeigen, ob sich das erste Verschlusselement und/oder das zweite Verschlusselement in der Schließstellung befinden oder nicht.

Zusätzlich können magnetische Mittel zum Unterstützen des Schließens der Verschlussvorrichtung vorgesehen sein.

Beispielsweise kann die Anzeigeeinrichtung auch dazu verwendet werden, um abhängig von dem Erreichen oder dem Lösen der Schließstellung weitere Maßnahmen einzuleiten. So kann beispielsweise bei einem Handschuhfach bei Erreichen der Schließstellung eine Handschuhfachbeleuchtung ausgeschaltet oder umgekehrt bei Lösen der Schließstellung die Handschuhfachbeleuchtung eingeschaltet werden. Mittels der Anzeigeeinrichtung kann somit die Handschuhfachbeleuchtung gesteuert werden, um sicher und zuverlässig in Abhängigkeit von der Betätigung einer geeigneten Verschlussvorrichtung betätigt zu werden.

Eine (allgemeine) Verschlussvorrichtung mit einer Anzeigeeinrichtung kann beispielsweise vorteilhaft auch an einem Maschinengehäuse oder an einem Schaltschrank zum Einsatz kommen, um ein richtiges Verschließen eines Maschinendeckels oder einer Schaltschranktür anzuzeigen.

Mittels einer solchen allgemeinen Verschlussvorrichtung können drei Baugruppen, die herkömmlich voneinander getrennt vorliegen, in eine Baueinheit integriert werden. So übernimmt die Verschlussvorrichtung zum einen die Funktion einer mechanischen Verrastung, zum zweiten unter Verwendung der magnetischen Mittel die Funktion einer Schließunterstützung und zum dritten durch die Anzeigeeinrichtung die Funktion einer Lagezustandsanzeige, aufgrund derer auch weitere (Steuerungs)-Maßnahmen eingeleitet werden können (wie z.B. bei einem Handschuhfach).

Die aus der WO 2008/006 357 A2, der WO 2009/092 368 A2, der WO 2010/006 594 A2, der WO 2008/006 354 A2, der WO 2008/006 356 A2, der WO 2009/010 049 A2 oder der WO 2009/127 96 A2 bekannten Verschlussvorrichtungen können in diesem Zusammenhang auch rein mechanisch, also ohne magnetische Mittel in Form von Magneten oder magnetischen Ankern ausgestaltet sein.

### Bezugszeichenliste

- 1: Starres Element
- 2: Biegsames Element
- 3: Erstes Verschlusselement
- 4: Zweites Verschlusselement
- 5a, 5b: Steckerteil
- 6a, 6b: Gehäuseteil
- 7a, 7b: Rastfeder
- 8a, 8b: Rastfedervorsprung
- 9a, 9b: Eingriffsvorsprung
- 10a, 10b, 11a, 11b: Magnet
- 12a, 12b: Ausnehmung
- 13a: Öffnung
- 14a, 14b: Deckel
- 15a: Einsatzteil
- 16a: Vorsprung
- 17a, 17b: Zapfen
- 18a: Öffnung
- 19: Drittes Verschlüsselement
- 20,21: Ende
- 22: Randabschnitt
- 23: Reed-Schalter
- 24: Messeinrichtung
- 25: Feder
- 26: Seitenfläche
- 27, 28: Magnet
- A1, A2: Abstand
- X, X': Schließrichtung
- Y, Y', Y": Öffnungsrichtung
- Y1, Y1': Richtungskomponente

## Patentansprüche

1. Befestigungsanordnung zur Befestigung eines biegsamen Elements (2) an einem starren Element (1), mit einem biegsamen Element (2) und einem starren Element (1) sowie einem ersten Verschlusselement (3) und einem zweiten Verschlusselement (4), die jeweils aus einem Steckerteil (5a, 5b), einem Gehäuseteil (6a, 6b) und einer Rastung (7a, 7b) bestehen, wobei
- jedes Verschlusselement (3, 4) verschlossen wird, indem das Steckerteil (5a, 5b) in eine Schließrichtung (X, X') mit dem Gehäuseteil (6a, 6b) bis zum Einrasten in einer Schließstellung zusammengesteckt wird, so dass das Steckerteil (5a, 5b) und das Gehäuseteil (6a, 6b) entgegen der Schließrichtung (X, X') aneinander gehalten sind,
- jedes Gehäuseteil (6a, 6b) so ausgebildet ist, dass durch eine Relativbewegung des Gehäuseteils (6a, 6b) relativ zu dem Steckerteil (5a, 5b) in eine Öffnungsrichtung (Y, Y'), die sich von der Schließrichtung (X, X') unterscheidet, das Steckerteil (5a, 5b) aus der Rastung (7a, 7b) geschoben und das Verschlusselement (3, 4) damit geöffnet werden kann,
- das Steckerteil (5a) des ersten Verschlusselements (3) und das Steckerteil (5b) des zweiten Verschlusselements (4) fest an dem einen von starrem Element (1) und biegsamem Element (2) und das Gehäuseteil (6a) des ersten Verschlusselements (3) und das Gehäuseteil (6b) des zweiten Verschlusselements (4) fest an dem anderen von starrem Element (1) und biegsamem Element (2) angeordnet sind,
**dadurch gekennzeichnet,**
**dass**
- das Gehäuseteil (6a) des ersten Verschlusselements (3) und das Gehäuseteil (6a) des zweiten Verschlusselements (4) so zueinander angeordnet sind, dass die Öffnungsrichtung (Y) des ersten Verschlusselements (3) und die Öffnungsrichtung (Y') des zweiten Verschlusselements (4) mit mindestens einer Richtungskomponente (Y1, Y1') gegeneinander gerichtet sind, so dass beim Öffnen das biegsame Element (2) gebogen wird, und
- in einem nicht gebogenen Zustand des biegsamen Elements (2) die Gehäuseteile (6a, 6b) so beabstandet sind, dass sie zum Schließen in eine den Steckerteilen (5a, 5b) gegenüberliegende Lage gebracht und durch Bewegung in die Schließrichtung (X, X') mit diesen verrasten.

2. Befestigungsanordnung nach Anspruch 1, **dadurch gekennzeichnet, dass** beim Öffnen das biegsame Element (2) zwischen den beiden Gehäuseteilen (6a, 6b) gebogen wird und die beiden Gehäuseteile (6a, 6b) sich aufeinander zu bewegen.

3. Befestigungsanordnung nach Anspruch 1 oder 2, **gekennzeichnet durch** magnetische Mittel (10a, 10b, 11a, 11b) zum Unterstützen des Schließens der Verschlusselemente (3, 4).

4. Befestigungsanordnung nach Anspruch 3, **dadurch gekennzeichnet, dass** die magnetischen Mittel (10a, 10b, 11a, 11 b) an jedem Verschlusselement (3, 4) durch einen an dem Steckerteil (5a, 5b) angeordneten ersten Magneten (10a, 10b) und einen an dem Gehäuseteil (6a, 6b) angeordneten zweiten Magneten (11a, 11 b) verwirklicht sind, die zum Schließen eine magnetische Anziehungskraft in die Schließrichtung (X, X') zwischen dem Steckerteil (5a, 5b) und dem Gehäuseteil (6a, 6b) bewirken und sich in der Schließstellung des jeweiligen Verschlusselements (3, 4) anziehend gegenüberstehen.

5. Befestigungsanordnung nach einem der Ansprüche 3 bis 4, **dadurch gekennzeichnet, dass** die magnetischen Mittel (10a, 10b, 11a, 11b) des ersten Verschlusselements (3) und des zweiten Verschlusselements (4) derart polarisiert sind, dass zwischen dem Steckerteil (5a) des ersten Verschlusselements (3) und dem Gehäuseteil (6b) des zweiten Verschlusselements (4), wenn diese einander angenähert werden, eine magnetische Abstoßungskraft wirkt.

6. Befestigungsanordnung nach einem der vorangehenden Ansprüche, **dadurch gekennzeichnet, dass** die Öffnungsrichtung (Y) des ersten Verschlusselements (3) und die Öffnungsrichtung (Y') des zweiten Verschlusselements (4) antiparallel zueinander gerichtet sind und die Schließrichtung (X) des ersten Verschlusselements (3) und die Schließrichtung (X') des zweiten Verschlusselements (4) parallel zueinander und senkrecht zu einer Ebene, in der sich die Öffnungsrichtung (Y) des ersten Verschlusselements (3) und die Öffnungsrichtung (Y') des zweiten Verschlusselements (4) erstrecken, gerichtet sind.

7. Befestigungsanordnung nach einem der vorangehenden Ansprüche, **dadurch gekennzeichnet, dass** die Rastung eines jeden Verschlusselements (3, 4) durch eine an dem Gehäuseteil (6a, 6b) angeordnete Rastfeder (7a, 7b) ausgebildet ist, mit der das zugeordnete Steckerteil (5a, 5b) durch Ansetzen in die Schließrichtung (X, X') rastend in Eingriff bringbar ist.

8. Befestigungsanordnung nach Anspruch 7, **dadurch gekennzeichnet, dass** die Rastfeder (7a, 7b) einen Rastfedervorsprung (8a, 8b) und das Steckerteil (5a, 5b) einen Eingriffsvorsprung (9a, 9b) aufweist, wobei in der Schließstellung eines jeden Verschlusselements (3, 4) der Rastfedervorsprung (8a, 8b) der Rastfeder (7a, 7b) und der Eingriffsvorsprung (9a, 9b) des Steckerteils (5a, 5b) formschlüssig derart miteinander in Eingriff stehen, dass das Steckerteil (5a, 5b) entgegen der Schließrichtung (X, X') an der Rastfeder (7a, 7b) gehalten ist.

9. Befestigungsanordnung nach Anspruch 7 oder 8, **dadurch gekennzeichnet, dass** die Rastfeder (7a, 7b) als Ringsegment ausgebildet ist, in der Schließstellung einen Zapfen (17a, 17b) des Steckerteils (5a, 5b) in eine Umfangsrichtung um die Schließrichtung (X, X') umgreift und umfänglich durch eine Öffnung (18a) geöffnet ist, so dass das Gehäuseteil (6a, 6b) zum Öffnen des Verschlusselements (3, 4) zusammen mit der daran angeordneten Rastfeder (7a, 7b) in die Öffnungsrichtung (Y, Y') relativ zu dem Steckerteil (5a, 5b) bewegbar ist.

10. Befestigungsanordnung nach einem der Ansprüche 7 bis 9, **dadurch gekennzeichnet, dass** die Rastfeder (7a) des ersten Verschlusselements (3) und die Rastfeder (7b) des zweiten Verschlusselements (4) jeweils in einer Ausnehmung (12a, 12b) des zugeordneten Gehäuseteils (6a, 6b) angeordnet sind, wobei der Abstand (A2) zwischen der Rastfeder (7a) des ersten Verschlusselements (3) und der Rastfeder (7b) des zweiten Verschlusselements (4) in der Schließstellung in dem nicht gebogenen Zustand des biegsamen Elements (2) dem Abstand (A1) zwischen dem Steckerteil (5a) des ersten Verschlusselements (3) und dem Steckerteil (5b) des zweiten Verschlusselements (4) entspricht.

11. Befestigungsanordnung nach einem der Ansprüche 1 bis 10, **dadurch gekennzeichnet, dass** es sich bei dem starren Element (1) um einen Fahrzeugboden und bei dem biegsamen Element (2) um eine Fußmatte eines Fahrzeugs handelt.

12. Befestigungsanordnung nach Anspruch 11, **dadurch gekennzeichnet, dass** das Gehäuseteil (6a, 6b) eines jeden Verschlusselements (3, 4) an einer dafür vorgesehenen Öffnung (23) an dem biegsamen Element (2) angeordnet ist, wobei das Gehäuseteil (6a, 6b) die Öffnung (23) durchgreift und mit einem Deckel (14a, 14b) verbunden ist und wobei das Gehäuseteil (6a, 6b) und der Deckel (14a, 14b) jeweils mit einem Randabschnitt den Rand der Öffnung (23) übergreifen, so dass das Gehäuseteil (6a, 6b) an dem biegsamen Element (2) gehalten ist.

13. Befestigungsanordnung nach einem der Ansprüche 1 bis 10, **dadurch gekennzeichnet, dass** es sich bei dem starren Element (1) um einen Helm, insbesondere einen Skihelm, und bei dem biegsamen Element (2) um eine Brille oder ein Visier handelt.

14. Befestigungsanordnung nach Anspruch 13, **dadurch gekennzeichnet, dass** das biegsame Element (2) in Form der Brille oder des Visiers gekrümmt ausgebildet ist mit einem ersten Ende (20) und einem zweiten Ende (21) und einem zwischen dem ersten Ende (20) und dem zweiten Ende (21) erstreckten Randabschnitt (22), wobei das erste Verschlusselement (3) an dem ersten Ende (20), das zweite Verschlusselement (4) an dem zweiten Ende (21) und ein drittes Verschlusselement (19) an dem Randabschnitt (22) zwischen dem ersten Ende (20) und dem zweiten Ende (21) angeordnet ist.

15. Befestigungsanordnung nach einem der vorangehenden Ansprüche, **gekennzeichnet durch** eine Anzeigeeinrichtung (23, 24; 25, 26) zum Anzeigen, ob sich das erste Verschlusselement (3) und/oder das zweite Verschlusselement (4) in der Schließstellung befinden oder nicht.

## Claims

1. A fastening arrangement for fastening a flexible element (2) to a rigid element (1), comprising a flexible element (2) and a rigid element (1) as well as a first closure element (3) and a second closure element (4), which each consist of a plug part (5a, 5b), a housing part (6a, 6b) and a catch (7a, 7b), wherein
- each closure element (3, 4) is closed in that the plug part (5a, 5b) is put together with the housing part (6a, 6b) in a closing direction (X, X') until snapping into place in a closed position, so that the plug part (5a, 5b) and the housing part (6a, 6b) are held at each other against the closing direction (X, X')
- each housing part (6a, 6b) is formed such that by means of a relative movement of the housing part (6a, 6b) relative to the plug part (5a, 5b) in an opening direction (Y, Y'), which differs from the closing direction (X, X'), the plug part (5a, 5b) is pushed out of the catch (7a, 7b) and the closure element (3, 4) hence can be opened,
- the plug part (5a) of the first closure element (3) and the plug part (5b) of the second closure element (4) are firmly arranged on the one of the rigid element (1) and the flexible element (2), and the housing part (6a) of the first closure element (3) and the housing part (6b) of the second closure element (4) are firmly arranged on the other one of the rigid element (1) and the flexible element (2),
**characterized in**
**that**
- the housing part (6a) of the first closure element (3) and the housing part (6b) of the second closure element (4) are arranged relative to each other such that the opening direction (Y) of the first closure element (3) and the opening direction (Y') of the second closure element (4) are directed against each other with at least one direction component (Y1, Y1'), so that the flexible element (2) is bent on opening, and
- in a non-bent condition of the flexible element (2) the housing parts (6a, 6b) are spaced such that for closing they are brought into a position opposite the plug parts (5a, 5b) and snap into place with the same by moving in the closing direction (X, X').

2. The fastening arrangement according to claim 1, **characterized in that** on opening the flexible element (2) is bent between the two housing parts (6a, 6b) and the two housing parts (6a, 6b) move towards each other.

3. The fastening arrangement according to claim 1 or 2, **characterized by** magnetic means (10a, 10b, 11 a, 11 b) for supporting the closing of the closure elements (3, 4).

4. The fastening arrangement according to claim 3, **characterized in that** the magnetic means (10a, 10b, 11 a, 11 b) on each closure element (3, 4) are realized by a first magnet (10a, 10b) arranged on the plug part (5a, 5b) and a second magnet (11a, 11 b) arranged on the housing part (6a, 6b), which for closing produce a force of magnetic attraction in closing direction (X, X') between the plug part (5a, 5b) and the housing part (6a, 6b) and in the closed position of the respective closure element (3, 4) oppose each other in an attracting manner.

5. The fastening arrangement according to any of claims 3 to 4, **characterized in that** the magnetic means (10a, 10b, 11 a, 11 b) of the first closure element (3) and of the second closure element (4) are polarized such that between the plug part (5a) of the first closure element (3) and the housing part (6b) of the second closure element (4), when the same are moved towards each other, a force of magnetic repulsion acts.

6. The fastening arrangement according to any of the preceding claims, **characterized in that** the opening direction (Y) of the first closure element (3) and the opening direction (Y') of the second closure element (4) are directed antiparallel to each other and the closing direction (X) of the first closure element (3) and the closing direction (X') of the second closure element (4) are directed parallel to each other and vertical to a plane in which the opening direction (Y) of the first closure element (3) and the opening direction (Y') of the second closure element (4) extend.

7. The fastening arrangement according to any of the preceding claims, **characterized in that** the catch of each closure element (3, 4) is formed by a catch spring (7a, 7b) arranged on the housing part (6a, 6b), with which the associated plug part (5a, 5b) can latchingly be brought in engagement by attaching the same in the closing direction (X, X').

8. The fastening arrangement according to claim 7, **characterized in that** the catch spring (7a, 7b) includes a catch spring protrusion (8a, 8b) and the plug part (5a, 5b) includes an engaging protrusion (9a, 9b), wherein in the closed position of each closure element (3, 4) the catch spring protrusion (8a, 8b) of the catch spring (7a, 7b) and the engaging protrusion (9a, 9b) of the plug part (5a, 5b) are positively in engagement with each other such that the plug part (5a, 5b) is held at the catch spring (7a, 7b) against the closing direction (X, X').

9. The fastening arrangement according to claim 7 or 8, **characterized in that** the catch spring (7a, 7b) is formed as ring segment, in the closed position engages around a trunnion (17a, 17b) of the plug part (5a, 5b) in a circumferential direction around the closing direction (X, X') and circumferentially is opened through an opening (18a), so that for opening the closure element (3, 4) the housing part (6a, 6b) is movable relative to the plug part (5a, 5b) in the opening direction (Y, Y') together with the catch spring (7a, 7b) arranged thereon.

10. The fastening arrangement according to any of claims 7 to 9, **characterized in that** the catch spring (7a) of the first closure element (3) and the catch spring (7b) of the second closure element (4) each are arranged in a recess (12a, 12b) of the associated housing part (6a, 6b), wherein in the closed position in the non-bent condition of the flexible element (2) the distance (A2) between the catch spring (7a) of the first closure element (3) and the catch spring (7b) of the second closure element (4) corresponds to the distance (A1) between the plug part (5a) of the first closure element (3) and the plug part (5b) of the second closure element (4).

11. The fastening arrangement according to any of claims 1 to 10, **characterized in that** the rigid element (1) is a vehicle floor and the flexible element (2) is a floor mat of a vehicle.

12. The fastening arrangement according to claim 11, **characterized in that** the housing part (6a, 6b) of each closure element (3, 4) is arranged on the flexible element (2) at an opening (23) provided for the same, wherein the housing part (6a, 6b) reaches through the opening (23) and is connected with a lid (14a, 14b), and wherein the housing part (6a, 6b) and the lid (14a, 14b) each reach over the edge of the opening (23) with an edge portion, so that the housing part (6a, 6b) is held at the flexible element (2).

13. The fastening arrangement according to any of claims 1 to 10, **characterized in that** the rigid element (1) is a helmet, in particular a ski helmet, and the flexible element (2) is a pair of glasses or a visor.

14. The fastening arrangement according to claim 13, **characterized in that** the flexible element (2) is formed curved in the form of the glasses or the visor with a first end (20) and a second end (21) and an edge portion (22) extending between the first end (20) and the second end (21), wherein the first closure element (3) is arranged at the first end (20), the second closure element (4) at the second end (21) and a third closure element (19) at the edge portion (22) between the first end (20) and the second end (21).

15. The fastening arrangement according to any of the preceding claims, **characterized by** a display means (23, 24; 25, 26) for indicating whether or not the first closure element (3) and/or the second closure element (4) is in the closed position.

## Revendications

1. Système de fixation pour la fixation d'un élément flexible (2) sur un élément rigide (1), avec un élément flexible (2) et un élément rigide (1), ainsi qu'avec un premier élément de fermeture (3) et un second élément de fermeture (4) qui se composent respectivement d'une partie connecteur (5a, 5b), d'une partie boîtier (6a, 6b) et d'un encliquetage (7a, 7b),
- chaque élément de fermeture (3, 4) étant fermé du fait que la partie connecteur (5a, 5b) est enfichée dans un sens de fermeture (X, X') avec la partie boîtier (6a, 6b) jusqu'à l'encliquetage dans une position de fermeture de sorte que la partie connecteur (5a, 5b) et la partie boîtier (6a, 6b) soient maintenues l'une contre l'autre dans le sens inverse au sens de fermeture (X, X'),
- chaque partie boîtier (6a, 6b) étant réalisée de sorte que par un mouvement relatif de la partie boitier (6a, 6b) par rapport à la partie connecteur (5a, 5b) dans un sens d'ouverture (Y, Y'), qui se distingue du sens de fermeture (X, X'), la partie connecteur (5a, 5b) puisse être poussée hors de l'encliquetage (7a, 7b) et l'élément de fermeture (3, 4) puisse ainsi être ouvert,
- la partie connecteur (5a) du premier élément de fermeture (3) et la partie connecteur (5b) du second élément de fermeture (4) étant disposées fixement sur un élément parmi l'élément rigide (1) et l'élément flexible (2), et la partie boîtier (6a) du premier élément de fermeture (3) et la partie boîtier (6b) du second élément de fermeture (4) étant disposées fixement sur l'autre élément parmi l'élément rigide (1) et l'élément flexible (2),
**caractérisé en ce que**
- la partie boîtier (6a) du premier élément de fermeture (3) et la partie boîtier (6a) du second élément de fermeture (4) sont disposées l'une par rapport à l'autre de sorte que le sens d'ouverture (Y) du premier élément de fermeture (3) et le sens d'ouverture (Y') du second élément de fermeture (4) avec au moins une composante directionnelle (Y1, Y1') soient dirigés l'un contre l'autre afin que l'élément flexible (2) soit plié lors de l'ouverture, et
- dans un état non plié de l'élément flexible (2), les parties boîtier (6a, 6b) sont espacées de sorte à être amenées pour la fermeture dans une position en regard par rapport aux parties connecteur (5a, 5b) et à s'encliqueter avec celles-ci par le mouvement dans le sens de fermeture (X, X').

2. Système de fixation selon la revendication 1, **caractérisé en ce que** lors de l'ouverture, l'élément flexible (2) est plié entre les deux parties boîtier (6a, 6b) et les deux parties boîtier (6a, 6b) se déplacent l'une vers l'autre.

3. Système de fixation selon la revendication 1 ou 2, **caractérisé par** des moyens magnétiques (10a, 10b, 11a, 11b) pour l'assistance à la fermeture des éléments de fermeture (3, 4).

4. Système de fixation selon la revendication 3, **caractérisé en ce que** les moyens magnétiques (10a, 10b, 11a, 11b) sont réalisés sur chaque élément de fermeture (3, 4) par un premier aimant (10a, 10b) disposé sur la partie connecteur (5a, 5b) et un second aimant (11a, 11b) disposé sur la partie boîtier (6a, 6b), qui provoquent pour la fermeture une force d'attraction magnétique dans le sens de fermeture (X, X') entre la partie connecteur (5a, 5b) et la partie boîtier (6a, 6b) et se font face par attraction dans la position de fermeture de l'élément de fermeture respectif (3, 4).

5. Système de fixation selon l'une quelconque des revendications 3 à 4, **caractérisé en ce que** les moyens magnétiques (10a, 10b, 11a, 11b) du premier élément de fermeture (3) et du second élément de fermeture (4) sont polarisés de telle manière qu'une force de répulsion magnétique agisse entre la partie connecteur (5a) du premier élément de fermeture (3) et la partie boîtier (6b) du second élément de fermeture (4) lorsque ceux-ci s'approchent.

6. Système de fixation selon l'une quelconque des revendications précédentes, **caractérisé en ce que** le sens d'ouverture (Y) du premier élément de fermeture (3) et le sens d'ouverture (Y') du second élément de fermeture (4) sont dirigés de manière non parallèle l'un à l'autre et le sens de fermeture (X) du premier élément de fermeture (3) et le sens de fermeture (X') du second élément de fermeture (4) sont dirigés parallèlement l'un à l'autre et perpendiculairement à un plan, dans lequel s'étendent le sens d'ouverture (Y) du premier élément de fermeture (3) et le sens d'ouverture (Y') du second élément de fermeture (4).

7. Système de fixation selon l'une quelconque des revendications précédentes, **caractérisé en ce que** l'encliquetage de chaque élément de fermeture (3, 4) est réalisé par un ressort d'encliquetage (7a, 7b) disposé sur la partie boîtier (6a, 6b), avec lequel la partie connecteur (5a, 5b) associée peut être amenée en engagement par encliquetage en la plaçant dans le sens de fermeture (X, X').

8. Système de fixation selon la revendication 7, **caractérisé en ce que** le ressort d'encliquetage (7a, 7b) présente une saillie de ressort d'encliquetage (8a, 8b) et la partie connecteur (5a, 5b) présente une saillie d'engagement (9a, 9b), la saillie de ressort d'encliquetage (8a, 8b) du ressort d'encliquetage (7a, 7b) et la saillie d'engagement (9a, 9b) de la partie connecteur (5a, 5b) étant en engagement l'une avec l'autre par complémentarité de forme dans la position de fermeture de chaque élément de fermeture (3, 4) de telle manière que la partie connecteur (5a, 5b) soit maintenue dans le sens inverse au sens de fermeture (X, X') sur le ressort d'encliquetage (7a, 7b).

9. Système de fixation selon la revendication 7 ou 8, **caractérisé en ce que** le ressort d'encliquetage (7a, 7b) est réalisé comme un segment annulaire, entoure dans la position de fermeture un tenon (17a, 17b) de la partie connecteur (5a, 5b) dans un sens périphérique autour du sens de fermeture (X, X') et est ouvert sur la périphérie par une ouverture (18a) de sorte que la partie de boîtier (6a, 6b) soit mobile par rapport à la partie connecteur (5a, 5b) pour l'ouverture de l'élément de fermeture (3, 4) conjointement avec le ressort d'encliquetage (7a, 7b) disposé dessus dans le sens d'ouverture (Y, Y').

10. Système de fixation selon l'une quelconque des revendications 7 à 9, **caractérisé en ce que** le ressort d'encliquetage (7a) du premier élément de fermeture (3) et le ressort d'encliquetage (7b) du second élément de fermeture (4) sont respectivement disposés dans un évidement (12a, 12b) de la partie boîtier (6a, 6b) associée, la distance (A2) entre le ressort d'encliquetage (7a) du premier élément de fermeture (3) et le ressort d'encliquetage (7b) du second élément de fermeture (4) dans la position de fermeture dans l'état non plié de l'élément flexible (2) correspondant à la distance (A1) entre la partie connecteur (5a) du premier élément de fermeture (3) et la partie connecteur (5b) du second élément de fermeture (4).

11. Système de fixation selon l'une quelconque des revendications 1 à 10, **caractérisé en ce qu'**il s'agit pour l'élément rigide (1) d'un plancher de véhicule et pour l'élément flexible (2) d'un tapis de sol d'un véhicule.

12. Système de fixation selon la revendication 11, **caractérisé en ce que** la partie boîtier (6a, 6b) de chaque élément de fermeture (3, 4) est disposée sur une ouverture (23) prévue à cet effet sur l'élément flexible (2), la partie boîtier (6a, 6b) pénétrant l'ouverture (23) et étant reliée à un couvercle (14a, 14b), et la partie boîtier (6a, 6b) et le couvercle (14a, 14b) recouvrant respectivement avec une section de bord le bord de l'ouverture (23) de sorte que la partie boîtier (6a, 6b) soit maintenue sur l'élément flexible (2).

13. Système de fixation selon l'une quelconque des revendications 1 à 10, **caractérisé en ce qu'**il s'agit pour l'élément rigide (1) d'un casque, en particulier d'un casque de ski et pour l'élément flexible (2) d'une paire de lunettes ou d'une visière.

14. Système de fixation selon la revendication 13, **caractérisé en ce que** l'élément flexible (2) est réalisé de manière courbée sous la forme d'une paire de lunettes ou d'une visière avec une première extrémité (20) et une seconde extrémité (21) et une section de bord (22) étendue entre la première extrémité (20) et la seconde extrémité (21), le premier élément de fermeture (3) étant disposé sur la première extrémité (20), le second élément de fermeture (4) sur la seconde extrémité (21) et un troisième élément de fermeture (19) sur la section de bord (22) entre la première extrémité (20) et la seconde extrémité (21).

15. Système de fixation selon l'une quelconque des revendications précédentes, **caractérisé par** un dispositif d'indication (23, 24 ; 25, 26) destiné à indiquer si le premier élément de fermeture (3) et/ou le second élément de fermeture (4) se trouve ou ne se trouve pas dans la position de fermeture.
